(19) Europäisches Patentamt
European Patent Office
Office européen des brevets

(11) **EP 4 722 295 A1**

(12) **EUROPEAN PATENT APPLICATION**
published in accordance with Art. 153(4) EPC

(43) Date of publication:
**08.04.2026 Bulletin 2026/15**

(21) Application number: **24815595.4**

(22) Date of filing: **31.05.2024**

(51) International Patent Classification (IPC):
*C08L 67/00* (2006.01)     *C08G 63/60* (2006.01)
*C08K 5/15* (2006.01)     *C08L 101/16* (2006.01)

(52) Cooperative Patent Classification (CPC):
**C08G 63/60; C08K 5/15; C08L 67/00; C08L 101/16**

(86) International application number:
**PCT/JP2024/019967**

(87) International publication number:
**WO 2024/248115 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.06.2023 JP 2023091552
02.06.2023 JP 2023091554**

(71) Applicant: **Kuraray Co., Ltd.
Kurashiki-shi, Okayama 710-0801 (JP)**

(72) Inventors:
• **SAKON Kazuki
Tsukuba-shi, Ibaraki 305-0841 (JP)**
• **TAKAI Junya
Tsukuba-shi, Ibaraki 305-0841 (JP)**
• **FUKUHARA Tadahito
Tsukuba-shi, Ibaraki 305-0841 (JP)**
• **IMAMATSU Masaya
Tsukuba-shi, Ibaraki 305-0841 (JP)**
• **KONISHI Hiroyuki
Tsukuba-shi, Ibaraki 305-0841 (JP)**

(74) Representative: **D Young & Co LLP
3 Noble Street
London EC2V 7BQ (GB)**

(54) **RESIN COMPOSITION**

(57)     A resin composition containing a block copolymer (I) and a cyclic ester compound (II), in which the block copolymer (I) contains a block structural unit (A) having a polylactic acid unit (a) as a main component and a block structural unit (B) having a polyester unit (b) containing a unit derived from an aliphatic diol (b1) and an aliphatic dicarboxylic acid (b2), as a main component, and a content of the cyclic ester compound (II) is 0.01 to 15% by mass with respect to 100% by mass of a total of the block copolymer (I) and the cyclic ester compound (II).

EP 4 722 295 A1

## Description

Technical Field

The present invention relates to a resin composition in which deterioration of tensile properties and deterioration of transparency are suppressed, crystallinity and a melting point are improved, and heat resistance is excellent. Further, the present invention relates to a resin composition excellent in the balance of biodegradability, heat resistance, and transparency.

Background Art

From the viewpoint of environmental protection, bioplastics have been actively developed. Polylactic acid which is a bioplastic and raw material of which is a plant-derived renewable resource such as corn produced through photosynthesis is expected to be used in a wide range of fields.

However, it is known that polylactic acid is more fragile than petroleum-based plastics, is inferior in viscosity, flexibility, impact resistance, heat resistance, and the like, and further, is easily hydrolyzed. Therefore, there is a case where the use of polylactic acid as a resin material is limited. As an attempt to alleviate the defects of polylactic acid, for example, a technique of utilizing a specific plasticizer or crystal nucleating agent has been studied (for example, PTL 1). In addition, a technique of copolymerizing a polyester using a monomer having a specific number of carbon atoms and polylactic acid has been studied (for example, PTL 2). Further, a technique utilizing a specific plasticizer or crystal nucleating agent has been studied (for example, PTL 3). In addition, a technique utilizing a composition of polylactic acid and a block copolymer obtained by copolymerizing a specific polyester and polylactic acid has been studied (for example, PTL 4).

Citation List

Patent Literature

PTL 1: JP2015-044984A
PTL 2: JPH08-157577
PTL 3: JP2018-62573
PTL 4: JP2001-335623

Summary of Invention

Technical Problem

According to the techniques described in PTL 1 to PTL 4, the defects of polylactic acid are mitigated to some extent, but they are not sufficiently satisfactory.

Particularly, from the viewpoint of versatility, a final product made of a bioplastic material is desired to have excellent heat resistance while having biodegradability under a wide range of conditions, or to have excellent impact resistance, excellent heat resistance, and excellent transparency while having biodegradability. However, when the crystallinity of polylactic acid is improved for the purpose of improving the heat resistance, the tensile properties and transparency tend to decrease.

Therefore, an object of the present invention is to provide a resin composition which has biodegradability under a wide range of conditions and is excellent in the balance of crystallinity, tensile properties, transparency, and heat resistance. Further, another object of the present invention is to provide a resin composition which is excellent in the balance of biodegradability, heat resistance, and transparency.

Solution to Problem

As a result of intensive studies to solve the above problem, the present inventors conceived the present invention described below and found that the problem can be solved.

That is, the present invention is as follows.

[1] A resin composition containing a block copolymer (I) and a cyclic ester compound (II), in which the block copolymer (I) includes a block structural unit (A) having a polylactic acid unit (a) as a main component and a block structural unit (B) having a polyester unit (b) containing a unit derived from an aliphatic diol (b1) and an aliphatic dicarboxylic acid (b2), as a main component, and a content of the cyclic ester compound (II) is 0.01 to 15% by mass with respect to 100% by mass of a total of the block copolymer (I) and the cyclic ester compound (II).

[2] The resin composition according to [1], in which the cyclic ester compound (II) contains a structure derived from an aliphatic diol (c1) and an aliphatic dicarboxylic acid (c2).

[3] The resin composition according to [2], in which the aliphatic diol (c1) and the aliphatic diol (b1) are the same, and the aliphatic dicarboxylic acid (c2) and the aliphatic dicarboxylic acid (b2) are the same.

[4] The resin composition according to any of [1] to [3], in which the aliphatic diol (b1) is an aliphatic diol having an alkyl group as a branched chain and having 4 or more carbon atoms.

[5] The resin composition according to any of [1] to [4], in which the block copolymer (I) has a number average molecular weight of 2,000 to 200,000.

[6] The resin composition according to any of [1] to [5], in which the block structural unit (B) has a number average molecular weight of less than 80,000.

[7] The resin composition according to any of [1] to [6], in which the aliphatic dicarboxylic acid (b2) has 4 or more and 12 or less carbon atoms.

[8] The resin composition according to any of [1] to [7], in which the aliphatic diol (b1) has 9 or less carbon atoms.

[9] The resin composition according to any of [1] to [8], in which the branched chain in the aliphatic diol (b1) is a methyl group.

[10] The resin composition according to any of [1] to [9], having a melting point of 110°C or higher and lower than 180°C.

[11] The resin composition according to any of [1] to [10], further containing an aliphatic polyester-based resin (III), in which a content of the cyclic ester compound (II) is 0.005 to 10% by mass with respect to 100% by mass of a total of the block copolymer (I), the cyclic ester compound (II), and the aliphatic polyester-based resin (III).

[12] The resin composition according to [11], in which the aliphatic polyester-based resin (III) is at least one selected from the group consisting of a biomass resin and a biodegradable resin.

[13] The resin composition according to [11] or [12], in which the aliphatic polyester-based resin (III) is a polylactic acid-based resin.

[14] The resin composition according to any of [1] to [4] and [6] to [13], in which the block copolymer (I) has a number average molecular weight of 5,000 to 400,000.

[15] The resin composition according to any of [1] to [5] and [7] to [14] in which the block structural unit (B) has a number average molecular weight of 1,000 or more and less than 300,000.

[16] The resin composition according to any of [1] to [15], in which the block copolymer (I) has a glass transition temperature of -80°C or higher and 15°C or lower.

[17] The resin composition according to any of [1] to [16], in which the block copolymer (I) has a glass transition temperature of -80°C or higher and -45°C or lower.

[18] The resin composition according to any of [1] to [17], in which the block copolymer (I) has a melting point of 110°C or higher and lower than 180°C.

[19] The resin composition according to any of [1] to [18], in which the block structural unit (A) contains a structural unit derived from poly-L-lactic acid or a structural unit derived from poly-D-lactic acid.

[20] The resin composition according to any of [1] to [19], in which 5% by mass or more and 95% by mass or less of the block structural unit (A) is contained with respect to 100% by mass of a total of the block structural unit (A) and the block structural unit (B).

Advantageous Effects of Invention

According to the present invention, a resin composition which has biodegradability under a wide range of conditions and is excellent in the balance of crystallinity, tensile properties, transparency, and heat resistance can be provided.

Further, according to the present invention, a resin composition which is excellent in the balance of biodegradability, heat resistance, and transparency can be provided. Description of Embodiments

Hereinafter, description is made based on examples of embodiments of the present invention. However, the embodiments shown below are examples for embodying the technical idea of the present invention, and the present invention is not limited to the following description.

Further, in the present specification, a preferable embodiment is shown, and a combination of two or more of the individual preferable embodiments is also a preferable embodiment. When there are several numerical value ranges for an item indicated by a numerical value range, the lower limit value and the upper limit value thereof can be selectively combined to form a preferable embodiment

Note that, in the present specification, when a numerical value range of "XX to YY" is described, it means "XX or more and YY or less".

In the present specification, "... unit" (here, "..." indicates a polymer) means "a structural unit derived from ...". For example, "polylactic acid unit" means "structural unit derived from polylactic acid", and "polyester unit" means "structural unit derived from polyester".

In the present specification, "main chain" means the longest molecular chain in a molecule. In addition, "branched chain" means a molecular chain other than the main chain in the molecule.

In the present specification, "L-lactic acid unit" means a structural unit derived from L-lactic acid in the block structural unit (A). Note that, when the block structural unit (A) contains a structural unit derived from lactide and the structural unit derived from lactide contains a structural unit derived from L-lactic acid, a portion corresponding to the L-lactic acid is also included in the L-lactic acid unit.

In the present specification, "D-lactic acid unit" means a structural unit derived from D-lactic acid in the block structural unit (A). Note that, when the block structural unit (A) contains a structural unit derived from lactide and the structural unit derived from lactide contains a structural unit derived from D-lactic acid, a portion corresponding to the D-lactic acid is also included in the D-lactic acid unit.

In the present specification, "poly-DL-lactic acid" means a polylactic acid containing an L-lactic acid unit and a D-lactic acid unit. Examples of the poly-DL-lactic acid include a block copolymer containing a poly-L-lactic acid block and a poly-D-lactic acid block, and a random copolymer randomly containing an L-lactic acid unit and a D-lactic acid unit.

In the present specification, "DL-lactic acid" means a mixture of D-lactic acid and L-lactic acid. In the present specification, "DL-lactide" means a mixture of D-lactide and L-lactide. In the present specification, "meso-lactide" means lactide formed from each one unit of D-lactic acid and L-lactic acid.

In the present specification, "melting point" means a melting peak temperature, and in a case where there are a plurality of melting peaks, it means a melting peak temperature at the melting peak present on the highest temperature side. The melting point can be determined by a differential scanning calorimeter, and specifically can be measured by the method described in Examples.

[Resin Composition]

The resin composition according to the first embodiment of the present invention is a resin composition containing a block copolymer (I) and a cyclic ester compound (II), in which the block copolymer (I) contains a block structural unit (A) having a polylactic acid unit (a) as a main component and a block structural unit (B) having a polyester unit (b) containing a unit derived from an aliphatic diol (b1) and an aliphatic dicarboxylic acid (b2), as a main component. In addition, in the resin composition, a content of the cyclic ester compound (II) is 0.01 to 15% by mass with respect to 100% by mass of a total of the block copolymer (I) and the cyclic ester compound (II).

The present inventors have conducted various studies on a resin composition which has biodegradability under a wide range of conditions and is excellent in the balance of crystallinity, tensile properties, transparency, and heat resistance. As a result, the present inventors have found that a resin composition containing a specific block copolymer (I) containing a block structural unit (A) and a block structural unit (B), and a specific amount of a cyclic ester compound (II) can satisfy the above-mentioned properties.

The reason why the resin composition according to the first embodiment of the present invention is excellent in the balance of the crystallinity, the tensile properties, the transparency, and the heat resistance is not clear, and various factors are combined, but it is presumed as follows.

Since the cyclic ester compound (II) contains an ester structure, it has high compatibility with the block copolymer (I) similarly containing an ester structure. Accordingly, even when the crystallinity of the resin composition is improved, a decrease in tensile properties and a decrease in transparency are suppressed. In addition, since the cyclic ester compound (II) is cyclic, the degree of molecular freedom is low, and it also contributes to an effect as a crystal nucleating agent, that is, an improvement in crystallinity and an improvement in melting point (improvement in heat resistance). For the above reason, it is presumed that the resin composition according to the first embodiment is excellent in the balance of crystallinity, tensile properties, transparency, and heat resistance.

In a resin composition according to a second embodiment of the present invention, the resin composition according to the first embodiment further contains an aliphatic polyester-based resin (III), and the content of the cyclic ester compound (II) is 0.005 to 10% by mass with respect to 100% by mass of the total of the block copolymer (I), the cyclic ester compound (II), and the aliphatic polyester-based resin (III).

As a result of various studies, the present inventors have found that the resin composition according to the second embodiment containing a specific block copolymer (I), a specific amount of a cyclic ester compound (II), and an aliphatic polyester-based resin (III) is excellent in the balance of biodegradability, heat resistance, and transparency.

The reason why the resin composition according to the second embodiment of the present invention is excellent in the balance of biodegradability, heat resistance, and transparency is not clear, and various factors are combined, but it is presumed as follows.

Since the cyclic ester compound (II) contains an ester structure, it has high compatibility with the block copolymer (I) and the aliphatic polyester-based resin (III), similarly containing an ester structure. Accordingly, even when the crystallinity of the resin composition is improved, a decrease in transparency is suppressed. In addition, since the cyclic ester compound (II) is cyclic, the degree of molecular freedom is low, and it also contributes to the effect of a crystal nucleating agent, that is, an improvement in crystallinity and an improvement in glass transition temperature (improvement in heat resistance). For the above reasons, it is presumed that the resin composition according to the second embodiment is excellent in the balance of biodegradability, heat resistance, and transparency.

<Block Copolymer (I)>

The block copolymer (I) contains a block structural unit (A) having a polylactic acid unit (a) as a main component and a block structural unit (B) having a polyester unit (b) containing a unit derived from an aliphatic diol (b1) and an aliphatic dicarboxylic acid (b2), as a main component.

<<Block Structural Unit (A)>>

<Polylactic Acid Unit (a)>

The block structural unit (A) has a polylactic acid unit (a) as a main component.
The "main component" means a unit having the highest content ratio among the units constituting the block structural unit (A).
The content ratio of the polylactic acid unit (a) in the block structural unit (A) is preferably 70% by mass or more, more preferably 80% by mass or more, further more preferably 85% by mass or more, and still further more preferably 90% by mass or more, and may be 100% by mass. Further, the upper limit of the polylactic acid unit (a) contained in the block structural unit (A) is not limited, and is, for example, 100% by mass or less.
The polylactic acid constituting the polylactic acid unit (a) may be prepared by a direct condensation method of lactic acid, or may be prepared by a ring-opening polymerization method of lactide. As the lactic acid, for example, at least one selected from the group consisting of L-lactic acid, D-lactic acid, and DL-lactic acid can be used. As the lactide, for example, at least one selected from the group consisting of L-lactide, D-lactide, DL-lactide, and meso-lactide can be used.
In addition, as the polylactic acid, poly-L-lactic acid, poly-D-lactic acid, poly-DL-lactic acid, an intramolecular stereocomplex obtained by mixing poly-L-lactic acid and poly-D-lactic acid, or an intermolecular stereocomplex polylactic acid can be used. From the viewpoint of cost, availability of raw materials, and ease of handling of the block copolymer (I), the polylactic acid is preferably poly-L-lactic acid, poly-D-lactic acid, or poly-DL-lactic acid, and more preferably poly-L-lactic acid or poly-D-lactic acid.
On the other hand, from the viewpoint of the cost and complexity of the synthesis and the processability of the block copolymer (I), the polylactic acid is preferably not an intramolecular stereocomplex or intermolecular stereocomplex polylactic acid.
From the viewpoint of even more excellent biodegradability and hydrolysis resistance, the block structural unit (A) preferably contains a structural unit derived from poly-L-lactic acid or a structural unit derived from poly-D-lactic acid.
In addition, from the viewpoint of even more excellent biodegradability and hydrolysis resistance, the block structural unit (A) contains a structural unit derived from poly-L-lactic acid or a structural unit derived from poly-D-lactic acid in an amount of preferably 70% by mass or more, more preferably 80% by mass or more, and further more preferably 90% by mass or more. For example, an example of preferable embodiments is that the block structural unit (A) consists of a structural unit derived from poly-L-lactic acid or a structural unit derived from poly-D-lactic acid, that is, the structural unit derived from poly-L-lactic acid or the structural unit derived from poly-D-lactic acid is 100% by mass.

<Unit (a') other than Polylactic Acid Unit (a)>

The block structural unit (A) may contain a unit (a') other than the polylactic acid unit (a), or it is not necessary to contain the unit (a').
The monomer constituting the unit (a') is not particularly limited as long as the effect of the present invention is not impaired, and examples thereof include a cyclic ester between two molecules and a lactone.
Examples of the $\alpha$-hydroxycarboxylic acid that forms the cyclic ester between two molecules include glycolic acid, $\alpha$-hydroxybutyric acid, $\alpha$-hydroxyisobutyric acid, $\alpha$-hydroxyvaleric acid, $\alpha$-hydroxycaproic acid, $\alpha$-hydroxyisocaproic acid, $\alpha$-hydroxyheptanoic acid, $\alpha$-hydroxyoctanoic acid, $\alpha$-hydroxydecanoic acid, $\alpha$-hydroxymyristic acid, $\alpha$-hydroxystearic acid, and an alkyl-substituted derivative thereof. Examples of the lactone include $\beta$-propiolactone, $\beta$-butyrolactone,

pivalolactone, γ-butyrolactone, δ-valerolactone, β-methyl-δ-valerolactone, and ε-caprolactone.

The content ratio of the unit (a') in the block structural unit (A) is preferably 30% by mass or less, more preferably 20% by mass or less, further more preferably 15% by mass or less, and still further more preferably 10% by mass or less.

<Number Average Molecular Weight of Block Structural Unit (A)>

The number average molecular weight of the block structural unit (A) is not limited as long as the effect of the present invention is not impaired. On the other hand, from the viewpoint of productivity, biodegradability, mechanical properties, glass transition temperature, crystal melting enthalpy, and the like, the number average molecular weight of the block structural unit (A) is preferably 500 or more, more preferably 1,000 or more, further more preferably 1,500 or more, further more preferably 3,000 or more, further more preferably 5,000 or more, and further more preferably 10,000 or more, and is preferably 200,000 or less, more preferably 150,000 or less, further more preferably 100,000 or less, further more preferably 50,000 or less, further more preferably 30,000 or less, and further more preferably 20,000 or less. That is, the number average molecular weight of the block structural unit (A) is preferably 500 to 200,000, more preferably 1,000 to 150,000, further more preferably 1,500 to 100,000, still further more preferably 3,000 to 50,000, still further more preferably 5,000 to 30,000, still further more preferably 5,000 to 20,000, and still further more preferably 10,000 to 20,000. Within the above numerical range, the productivity in the synthesis of the block copolymer (I) is good. Note that, when the block copolymer (I) has a plurality of block structural units (A), the number average molecular weight of the block structural unit (A) means the total of all the blocks.

The number average molecular weight of the block structural unit (A) can be determined from the number average molecular weight of the block copolymer (I) mentioned later and the mass content of the block structural unit (A).

<<Block Structural Unit (B)>>

The block structural unit (B) has a polyester unit (b) as a main component.

The "main component" means a unit having the highest content ratio among the units constituting the block structural unit (B).

The content ratio of the polyester unit (b) in the block structural unit (B) is preferably 50% by mass or more, more preferably 70% by mass or more, further more preferably 80% by mass or more, still further more preferably 85% by mass or more, and particularly preferably 90% by mass or more, and can be 100% by mass. Further, the upper limit of the polyester unit (b) contained in the block structural unit (B) is not limited, and is, for example, 100% by mass or less.

The polyester unit (b) contains a unit derived from an aliphatic diol (b1) and an aliphatic dicarboxylic acid (b2). Specifically, the polyester unit (b) contains a unit derived from a polyester obtained by reacting an aliphatic diol (b1) with an aliphatic dicarboxylic acid (b2). The polyester unit (b) may contain a unit derived from a monomer other than the aliphatic diol (b1) and the aliphatic dicarboxylic acid (b2), or it is not necessary to contain the unit.

The monomer other than the aliphatic diol (b1) and the aliphatic dicarboxylic acid (b2) is not particularly limited as long as the effect of the present invention is not impaired.

The total amount of the aliphatic diol (b1) and the aliphatic dicarboxylic acid (b2) in the polyester unit (b) is preferably 90 mol% or more, more preferably 95 mol% or more, and further more preferably 99 mol% or more, and may be 100 mol%.

<Aliphatic Diol (b1)>

The number of carbon atoms of the aliphatic diol (b1) is not limited as long as the effect of the present invention is not impaired. Note that, the "number of carbon atoms" is the number of carbon atoms of the entire aliphatic diol (b1) including the number of carbon atoms constituting the alkyl group. On the other hand, in the first embodiment of the present invention, the number of carbon atoms of the aliphatic diol (b1) is preferably 4 to 12, more preferably 5 to 10, further more preferably 6 to 9, and still further more preferably 6, from the viewpoint of availability, hydrolysis resistance, biodegradability, and the like of the monomer. In addition, in the second embodiment of the present invention, from the viewpoint of exhibiting excellent impact resistance (particularly, impact resistance at low temperature), it is preferably 4 or more, more preferably 5 or more, and further more preferably 6 or more, and from the viewpoint of exhibiting even more excellent biodegradability, it is preferably 30 or less, more preferably 18 or less, and further more preferably 9 or less. That is, in the second embodiment of the present invention, the number of carbon atoms of the aliphatic diol (b1) is preferably 4 to 30, more preferably 5 to 18, and further more preferably 6 to 9.

When the aliphatic diol (b1) has an alkyl group as a branched chain, the block structural unit (B) becomes flexible, and the block copolymer (I) exhibits excellent tensile properties, biodegradability, and impact resistance, and hydrolysis resistance is improved. Therefore, the aliphatic diol (b1) preferably has an alkyl group as a branched chain, and is more preferably an aliphatic diol having 4 or more carbon atoms and having an alkyl group as a branched chain.

Here, the "branched chain" in the aliphatic diol (b1) refers to a partial structure branched from the "main chain" in the aliphatic diol (b1), and a hydroxyl group is not bonded to the terminal thereof.

In addition, it is considered that when the aliphatic diol (b1) has an alkyl group as a branched chain, the block structural unit (B) tends to be an amorphous polymer, and therefore, when the block structural unit (B) is biodegraded, a microorganism is likely to enter the polymer structure, and it is likely to have biodegradability under a wide range of conditions. On the other hand, when the block structural unit (B) is not an amorphous polymer, it is considered that a microorganism is less likely to enter the polymer structure during biodegradation. However, being an amorphous polymer is one of the factors that affect biodegradability. This is because it is considered that biodegradation and hydrolysis occur due to a combination of various factors such as whether a microorganism recognizes the amorphous structure as a bait, whether an enzyme or a microorganism is easily accessible, steric hindrance of the main chain, the melting point, and the degree of crystallinity. Therefore, it is not always the case where a resin composition containing a block copolymer (I) containing an amorphous polymer has good biodegradability.

In the aliphatic diol (b1), the number of branched chains is preferably 1 or 2, and more preferably 1. Further, the branched chain is preferably a methyl group, an ethyl group, or a propyl group, more preferably a methyl group or an ethyl group, and further more preferably a methyl group. In addition, when the aliphatic diol (b1) has a plurality of branched chains, the respective branched chains can be the same as or different from each other.

The aliphatic diol (b1) preferably has hydroxyl groups at both ends of the main chain, from the viewpoint of facilitating reaction with a dicarboxylic acid and ease of production of a triblock copolymer, and from the viewpoint of achieving even better biodegradability and hydrolysis resistance.

Examples of the aliphatic diol (b1) include 2-methyl-1,3-propanediol, 2,2-dimethyl-1,3-propanediol, 2-ethyl-1,3-propanediol, 2-ethyl-2-methyl-1,3-propanediol, 2-methyl-1,4-butanediol, 1,2-pentanediol, 1,3-pentanediol, 2,3-pentanediol, 2,4-pentanediol, 2-methyl-2,4-pentanediol, 1,4-pentanediol, 2-methyl-1,5-pentanediol, 3-methyl-1,5-pentanediol, 2-methyl-2,4-pentanediol, 2-ethyl-1,5-pentanediol, 2,4-dimethyl-1,5-pentanediol, 2,4-diethyl-1,5-pentanediol, 1,2-hexanediol, 1,3-hexanediol, 1,4-hexanediol, 1,5-hexanediol, 2-ethyl-1,6-hexanediol, and 2-methyl-1,8-octanediol. The aliphatic diol (b1) is preferably 2-methyl-1,3-propanediol, 3-methyl-1,5-pentanediol and 2,4-diethyl-1,5-pentanediol, and more preferably 3-methyl-1,5-pentanediol.

One kind of the aliphatic diol (b1) can be used alone, or two or more kinds thereof can be used in combination.

<Aliphatic Dicarboxylic Acid (b2)>

The number of carbon atoms of the aliphatic dicarboxylic acid (b2) is not limited as long as the effect of the present invention is not impaired. On the other hand, in the first embodiment of the present invention, the number of carbon atoms of the aliphatic dicarboxylic acid (b2) is preferably 4 to 12, more preferably 5 to 10, and further more preferably 6 to 8, from the viewpoint of producibility, hydrolysis resistance, biodegradability, and the like. Further, in the second embodiment of the present invention, from the viewpoint of exhibiting excellent impact resistance (particularly, impact resistance at low temperature) and the like, the number of carbon atoms of the aliphatic dicarboxylic acid (b2) is preferably 4 or more, more preferably 5 or more, and further more preferably 6 or more, and from the viewpoint of exhibiting even more excellent biodegradability, it is preferably 12 or less, more preferably 10 or less, and further more preferably 8 or less. That is, in the second embodiment of the present invention, the number of carbon atoms of the aliphatic dicarboxylic acid (b2) is preferably 4 to 12, more preferably 5 to 10, and further more preferably 6 to 8.

Examples of the aliphatic dicarboxylic acid (b2) include succinic acid, glutaric acid, adipic acid, pimelic acid, suberic acid, azelaic acid, sebacic acid, undecanedioic acid, and decanedicarboxylic acid. Succinic acid, adipic acid, and sebacic acid are preferable, and adipic acid is more preferable.

One kind of the aliphatic dicarboxylic acid (b2) can be used alone, or two or more kinds thereof can be used in combination.

<Content Ratio of Aromatic Carboxylic Acid Unit in Polyester Unit (b)>

The content ratio of the aromatic carboxylic acid unit in the polyester unit (b) is preferably 20% by mass or less. When the content is 20% by mass or less, biodegradability is improved.

Here, the aromatic carboxylic acid unit also includes a heteroaromatic carboxylic acid unit containing a heteroatom. The aromatic carboxylic acid unit can include one or both of a heteroaromatic carboxylic acid unit containing a heteroatom and a heteroaromatic carboxylic acid unit not containing a heteroatom, or can only include a heteroaromatic carboxylic acid unit not containing a heteroatom.

From this viewpoint, the content ratio of the aromatic carboxylic acid unit in the polyester unit (b) is more preferably 15% by mass or less, further more preferably 10% by mass or less, still further more preferably 5% by mass or less, and still further more preferably 1% by mass or less, and it is not necessary for the polyester unit (b) to contain the aromatic carboxylic acid unit.

<Preferable Combination of Aliphatic Diol (b1) and Aliphatic Dicarboxylic Acid (b2)>

From the viewpoint of being able to exhibit even better biodegradability, hydrolysis resistance, tensile properties, impact resistance, heat resistance, and the like, a combination of 2-methyl-1,3-propanediol and succinic acid, a combination of 3-methyl-1,5-pentanediol and succinic acid, a combination of 2,4-diethyl-1,5-pentanediol and succinic acid, a combination of 2-methyl-1,3-propanediol and adipic acid, a combination of 3-methyl-1,5-pentanediol and adipic acid, and a combination of 2,4-diethyl-1,5-pentanediol and adipic acid are examples of preferable embodiments, a combination of 3-methyl-1,5-pentanediol and succinic acid, a combination of 2,4-diethyl-1,5-pentanediol and succinic acid, a combination of 3-methyl-1,5-pentanediol and adipic acid, and a combination of 2,4-diethyl-1,5-pentanediol and adipic acid are examples of more preferable embodiments, and a combination of 3-methyl-1,5-pentanediol and adipic acid is one example of further more preferable embodiments.

<Ratio of Aliphatic Diol (b1) and Aliphatic Dicarboxylic Acid (b2)>

The charging molar ratio [aliphatic diol (b1)/aliphatic dicarboxylic acid (b2)] when the aliphatic diol (b1) and the aliphatic dicarboxylic acid (b2) are reacted is preferably 1.4/1 to 1/1.4, and more preferably 1.2/1 to 1/1.2.

<Unit (b') Other than Polyester Unit (b)>

The block structural unit (B) may contain a unit (b') other than the polyester unit (b), or it is not necessary to contain the unit (b').
The monomer constituting the unit (b') is not particularly limited as long as the effect of the present invention is not impaired, and examples thereof include polyamide and polyurethane.
The content ratio of the unit (b') in the block structural unit (B) is preferably 50% by mass or less, more preferably 30% by mass or less, further more preferably 20% by mass or less, still further more preferably 15% by mass or less, and particularly preferably 10% by mass or less.

<Number Average Molecular Weight of Block Structural Unit (B)>

The number average molecular weight of the block structural unit (B) is not limited as long as the effect of the present invention is not impaired. In the first embodiment of the present invention, the number average molecular weight of the block structural unit (B) is preferably less than 200,000, more preferably less than 100,000, further more preferably less than 80,000, and still further more preferably less than 50,000, from the viewpoint of productivity, and is preferably 1,000 or more, more preferably 4,000 or more, further more preferably 8,000 or more, and still further more preferably 10,000 or more, from the viewpoint of melting point and tensile properties. That is, in the first embodiment of the present invention, the number average molecular weight of the block structural unit (B) is preferably 1,000 or more and less than 200,000, more preferably 4,000 or more and less than 100,000, further more preferably 8,000 or more and less than 80,000, and still further more preferably 10,000 or more and less than 50,000.
In the second embodiment of the present invention, the number average molecular weight of the block structural unit (B) is preferably less than 300,000, more preferably less than 100,000, further more preferably less than 80,000, and still further more preferably less than 50,000, from the viewpoint of productivity, and the number average molecular weight of the block structural unit (B) is preferably 1,000 or more, more preferably 4,000 or more, further more preferably 8,000 or more, still further more preferably 10,000 or more, and still further more preferably 20,000 or more, from the viewpoint of glass transition temperature, crystal melting enthalpy, and the like. That is, in the second embodiment of the present invention, the number average molecular weight of the block structural unit (B) is preferably 1,000 or more and less than 300,000, more preferably 4,000 or more and less than 100,000, further more preferably 8,000 or more and less than 80,000, still further more preferably 10,000 or more and less than 50,000, and even still further more preferably 20,000 or more and less than 50,000.
The number average molecular weight of the block structural unit (B) can be determined by gel permeation chromatography (GPC) from the number average molecular weight of the block copolymer (I) mentioned later and the mass content of the block structural unit (B), and specifically, can be measured by the method described in Examples.

<Structural Unit Ratio of Block Copolymer (I)>

The block structural unit (A) is contained in an amount of preferably 5% by mass or more and 95% by mass or less with respect to 100% by mass of the total of the block structural unit (A) and the block structural unit (B).
When the ratio of the block structural unit (A) is 5% by mass or more, the heat resistance of the resin composition tends to be even more excellent. In addition, when the ratio of the block structural unit (A) is 95% by mass or less, the tensile properties and biodegradability of the resin composition tend to be even more excellent, and the tensile properties are even further more excellent.

From the viewpoint of heat resistance, the ratio of the block structural unit (A) is more preferably 10% by mass or more, and further more preferably 15% by mass or more. Further, from the viewpoint of biodegradability and tensile properties, the ratio of the block structural unit (A) is more preferably 80% by mass or less, further more preferably 75% by mass or less, still further more preferably 70% by mass or less, and even still further more preferably 60% by mass or less.

The ratio of the block structural unit (A) can be determined by $^1$H-NMR, and specifically, can be measured by the method described in Examples.

Further, the total content ratio of the block structural unit (A) and the block structural unit (B) in the block copolymer (I) is preferably 90% by mass or more, more preferably 95% by mass or more, and may be 100% by mass. In addition, the upper limit of the total content ratio of the block structural unit (A) and the block structural unit (B) in the block copolymer (I) is not limited, and is, for example, 100% by mass or less.

The block copolymer (I) may contain a unit other than the block structural unit (A) and the block structural unit (B), or it is not necessary to contain the block structural unit (A) and block structural unit (B).

The unit other than the block structural unit (A) and the block structural unit (B) is not particularly limited as long as the effect of the present invention is not impaired.

The content ratio of the unit other than the block structural unit (A) and the block structural unit (B) in the block copolymer (I) is preferably 10% by mass or less, and more preferably 5% by mass or less.

<Number Average Molecular Weight of Block Copolymer (I)>

In the first embodiment of the present invention, from the viewpoint of heat resistance and tensile properties, the number average molecular weight of the block copolymer (I) is preferably 2,000 or more, more preferably 5,000 or more, further more preferably 10,000 or more, and still further more preferably 20,000 or more.

Further, in the first embodiment of the present invention, from the viewpoint of the processability of the resin composition and the productivity of the block copolymer (I), the number average molecular weight of the block copolymer (I) is preferably 450,000 or less, more preferably 350,000 or less, further more preferably 250,000 or less, still further more preferably 200,000 or less, even still further more preferably 150,000 or less, and can be 100,000 or less.

That is, in the first embodiment of the present invention, the number average molecular weight of the block copolymer (I) is preferably 2,000 to 450,000, more preferably 2,000 to 400,000, further more preferably 2,000 to 350,000, still further more preferably 2,000 to 250,000, still further more preferably 2,000 to 200,000, still further more preferably 5,000 to 150,000, still further more preferably 10,000 to 100,000, and still further more preferably 20,000 to 100,000.

In the second embodiment of the present invention, from the viewpoint of heat resistance, the number average molecular weight of the block copolymer (I) is preferably 5,000 or more, more preferably 10,000 or more, further more preferably 15,000 or more, and still further more preferably 20,000 or more, and from the viewpoint of ease of production and processability, the number average molecular weight of the block copolymer (I) is preferably 400,000 or less, more preferably 200,000 or less, and further more preferably 100,000 or less.

That is, in the second embodiment of the present invention, the number average molecular weight of the block copolymer (I) is preferably 5,000 to 400,000, more preferably 10,000 to 200,000, and further more preferably 15,000 to 100,000.

The number average molecular weight of the block copolymer (I) can be determined by gel permeation chromatography (GPC), and specifically, can be measured by the method described in Examples.

<<Bonding Form of Block Copolymer (I)>>

The bonding form of the block copolymer (I) is preferably a triblock type or a diblock type, and more preferably a triblock type. The block copolymer (I) may be a mixture of a triblock type and a diblock type. Specifically, the bonding form is preferably [block structural unit (A)]-[block structural unit (B)]-[block structural unit (A)].

<<Melting Point of Block Copolymer (I)>>

The melting point of the block copolymer (I) is preferably 110°C or higher and lower than 180°C.

When the melting point of the block copolymer (I) is 110°C or higher, it is hardly softened even at a temperature equal to or higher than the glass transition temperature of the block copolymer (I), and the resin composition has excellent heat resistance. In addition, when the melting point of the block copolymer (I) is less than 180°C, the melting point does not become too high, and for example, processability is excellent such as easy melt processability. Therefore, the melting point of the block copolymer (I) is preferably 115°C or higher, more preferably 120°C or higher, and further more preferably 125°C or higher, and is preferably 175°C or lower, more preferably 170°C or lower, further more preferably 160°C or lower

and still further more preferably 155°C or lower. That is, the melting point of the block copolymer (I) is preferably 115°C or higher and 175°C or lower, more preferably 115°C or higher and 170°C or lower, further more preferably 120°C or higher and 160°C or lower, and still further more preferably 125°C or higher and 155°C or lower.

The melting point of the block copolymer (I) can be determined by a differential scanning calorimeter, and specifically, can be measured by a method described in Examples.

<<Glass Transition Temperature of Block Copolymer (I)>>

In one embodiment of the present invention, the glass transition temperature of the block copolymer (I) is preferably -80°C or higher and 15°C or lower, more preferably -80°C or higher and -10°C or lower, and further more preferably -80°C or higher and -15°C or lower. Within the above numerical range, the resin composition tends to be excellent in flexibility and impact resistance.

From the viewpoint of impact resistance at low temperature, the glass transition temperature of the block copolymer (I) is preferably -20°C or lower, more preferably -25°C or lower, and further more preferably -30°C or lower, may be -35°C or lower, and may be -45°C or lower.

The glass transition temperature of the block copolymer (I) is preferably -80°C or higher, and the lower limit value is preferably lower, but may be, for example, -70°C or higher, -60°C or higher, or -50°C or higher.

In another embodiment of the present invention, the glass transition temperature of the block copolymer (I) is preferably -80°C or higher and -20°C or lower, more preferably -80°C or higher and -25°C or lower, further more preferably -80°C or higher and -30°C or lower, still further more preferably -80°C or higher and -35°C or lower, and even still further more preferably -80°C or higher and -45°C or lower.

In still another embodiment of the present invention, the glass transition temperature of the block copolymer (I) is preferably -70°C or higher and -20°C or lower, and more preferably -70°C or higher and -30°C or lower.

In another embodiment of the present invention, it may be -60°C or higher and -10°C or lower, -60°C or higher and -20°C or lower, -60°C or higher and -30°C or lower, -50°C or higher and -30°C or lower, -50°C or higher and -35°C or lower, or -50°C or higher and -45°C or lower.

The glass transition temperature of the block copolymer (I) can be determined by differential scanning calorimetry.

<Method for Producing Block Copolymer (I)>

As a method for producing the block copolymer (I), a known production method can be adopted.

(1) The known method for producing the block copolymer (I) may be, for example, a method in which a polyester constituting the polyester unit (b) is synthesized, and the polyester and lactide are subjected to a polymerization reaction.

The polyester can be synthesized by a known method. For example, a polyester can be synthesized by reacting an aliphatic diol (b1) with an aliphatic dicarboxylic acid (b2) using an esterification catalyst (for example, tin octylate, tin chloride, tin oxide).

When the polyester and the lactide are subjected to a polymerization reaction, a ring-opening polymerization catalyst (for example, tin octylate, tin chloride, or tin oxide) is preferably used. Examples of the polymerization reaction include solution polymerization, melt polymerization, and interfacial polycondensation, and a known polymerization reaction condition can be set for any of these.

(2) In addition, the known method for producing the block copolymer (I) may be, for example, a method in which a polylactic acid constituting the polylactic acid unit (a) and a polyester constituting the polyester unit (b) are respectively synthesized, and the polylactic acid and the polyester are reacted.

The polylactic acid can be synthesized by a known method. For example, lactic acid may be reacted by a direct condensation method to synthesize polylactic acid, or lactide may be reacted by a ring-opening polymerization method to synthesize polylactic acid.

When the polylactic acid and the polyester are subjected to a polymerization reaction, an esterification catalyst (for example, tin octylate, tin chloride, or tin oxide) is preferably used. Examples of the polymerization reaction include solution polymerization, melt polymerization, and interfacial polycondensation, and a known polymerization reaction condition can be set for any of these.

<Cyclic Ester Compound (II)>

The cyclic ester compound (II) is not particularly limited, and may be a cyclized product of a hydroxycarboxylic acid such as a cyclic ester between two molecules such as an $\alpha$-hydroxycarboxylic acid, a $\gamma$-hydroxycarboxylic acid, or a 3-hydroxycarboxylic acid, a condensed cyclized product of an alcohol and a carboxylic acid such as a lactone, or a cyclic compound having another ester structure.

Examples of the $\alpha$-hydroxycarboxylic acid that forms the cyclic ester between two molecules include glycolic acid, L- and/or D-lactic acid, $\alpha$-hydroxybutyric acid, $\alpha$-hydroxyisobutyric acid, $\alpha$-hydroxyvaleric acid, $\alpha$-hydroxycaproic acid, $\alpha$-hydroxyisocaproic acid, $\alpha$-hydroxyheptanoic acid, $\alpha$-hydroxyoctanoic acid, $\alpha$-hydroxydecanoic acid, $\alpha$-hydroxymyristic acid, $\alpha$-hydroxystearic acid, and an alkyl-substituted derivative thereof.

Examples of the lactone include $\beta$-propiolactone, $\beta$-butyrolactone, pivalolactone, $\gamma$-butyrolactone, $\delta$-valerolactone, $\beta$-methyl-$\delta$-valerolactone, and $\epsilon$-caprolactone.

Examples of the cyclic compound having another ester structure can include dioxanone such as trimethylene carbonate. When the cyclic ester has an asymmetric carbon, it may be any of a D-body, an L- body, and a racemic body.

One of these cyclic esters can be used alone, or two or more kinds thereof can be used in combination.

The cyclic ester compound (II) preferably contains a structure derived from an aliphatic diol (c1) and an aliphatic dicarboxylic acid (c2), that is, is preferably a cyclic ester compound obtained by reacting an aliphatic diol (c1) and an aliphatic dicarboxylic acid (c2), from the viewpoint of obtaining a resin composition more excellent in the balance of crystallinity, tensile properties, transparency, and heat resistance, and from the viewpoint of obtaining a resin composition more excellent in the balance of biodegradability, heat resistance, and transparency.

The aliphatic diol (c1) is not particularly limited, and examples thereof include those similar to the aliphatic diol (b1).

The aliphatic dicarboxylic acid (c2) is not particularly limited, and examples thereof include those similar to the aliphatic dicarboxylic acid (b2).

Specific examples of the cyclic ester compound (II) containing a structure derived from an aliphatic diol (c1) and an aliphatic dicarboxylic acid (c2) include a cyclic ester compound obtained by reacting the above-mentioned aliphatic diol (b1) and aliphatic dicarboxylic acid (b2).

A preferable combination of the aliphatic diol (c1) and the aliphatic dicarboxylic acid (c2) is the same as the preferable combination of the aliphatic diol (b1) and the aliphatic dicarboxylic acid (b2).

The cyclic ester compound (II) containing the structure derived from the aliphatic diol (c1) and the aliphatic dicarboxylic acid (c2) is preferably a cyclic ester compound obtained by reacting 3-methyl-1,5-pentanediol and adipic acid, from the viewpoint of obtaining a resin composition excellent in the balance of crystallinity, tensile properties, transparency, and heat resistance.

In addition, it is preferable that the aliphatic diol (c1) and the aliphatic diol (b1) are the same, and the aliphatic dicarboxylic acid (c2) and the aliphatic dicarboxylic acid (b2) are the same, from the viewpoint of obtaining a resin composition excellent in the balance of crystallinity, tensile properties, transparency, and heat resistance.

The method for producing the cyclic ester compound (II) is not particularly limited, and it can be produced by a known condensation reaction using a hydroxycarboxylic acid or an alcohol and a carboxylic acid as raw materials.

<Aliphatic Polyester-Based Resin (III)>

In the present embodiment, the aliphatic polyester-based resin (III) is preferably at least one selected from the group consisting of a biomass resin and a biodegradable resin, from the viewpoint of environmental protection.

Examples of the aliphatic polyester-based resin (III) include polylactic acid (PLA), polycaprolactone (PCL), poly (caprolactone/butylene succinate) (PCLBS), polybutylene succinate (PBS), poly (butylene succinate/adipate) (PBSA), poly (butylene succinate/carbonate) (PEC), poly (ethylene terephthalate/succinate) (PETS), poly (butylene adipate/terephthalate) (PBAT), poly (tetramethylene adipate/terephthalate) (PTMT), polyethylene succinate (PES), polyglycolic acid (PGA), polyethylene furanoate (PEF), polyhydroxyalkanoate (PHA) [for example, polyhydroxybutyrate (PHB), polyhydroxybutyrate valerate (PHBV), and the like], and a copolymer containing these.

One kind of the aliphatic polyester-based resin (III) may be used alone, or two or more kinds thereof may be used in combination.

The aliphatic polyester-based resin (III) is preferably PLA, PBS, PBSA, or PBAT, and more preferably PLA and a copolymer thereof, that is, a polylactic acid-based resin, from the viewpoint of exhibiting even more excellent heat resistance, tensile properties, and biodegradability.

The melting point of the aliphatic polyester-based resin (III) is preferably 100°C or higher, more preferably 110°C or higher, further more preferably 130°C or higher, still further more preferably 140°C or higher, still further more preferably 155°C or higher, and still further more preferably 170°C or higher, from the viewpoint of exhibiting even more excellent heat resistance. In addition, the melting point of the aliphatic polyester-based resin (III) is preferably 300°C or lower, more preferably 270°C or lower, further more preferably 240°C or lower, still further more preferably 220°C or lower, and still further more preferably 200°C or lower, from the viewpoint of moldability.

When a polylactic acid-based resin is used as the aliphatic polyester-based resin (III), examples of the polylactic acid-based resin include at least one selected from the group consisting of a homopolymer of L-lactic acid, a homopolymer of D-lactic acid, a copolymer of L-lactic acid and D-lactic acid, a homopolymer of DL-lactic acid, a copolymer of DL-lactic acid and L-lactic acid, a copolymer of DL-lactic acid and D-lactic acid, and a polymer of lactide which is a cyclic dimer of lactic acid.

Further, the polylactic acid-based resin may be a copolymer of lactic acid and an aliphatic hydroxycarboxylic acid other than lactic acid, an aliphatic dicarboxylic acid, an aliphatic diol, an aromatic dicarboxylic acid, or the like. The copolymer preferably contains a structural unit derived from lactic acid in an amount of 70 mol% or more, more preferably 80 mol% or more, and further more preferably 90 mol% or more.

Among these, as the polylactic acid-based resin, a homopolymer of L-lactic acid, a homopolymer of D-lactic acid, or a copolymer of L-lactic acid and D-lactic acid is preferable, and a homopolymer of L-lactic acid is more preferable.

One kind of the polylactic acid-based resin may be used alone, or two or more kinds thereof may be used in combination.

A commercially available product may be used as the polylactic acid-based resin. Examples of the commercially available product include "INGEO series" (trade name) manufactured by NatureWorks, "Luminy series" (trade name) manufactured by TOTAL CORBION, "Revode" series manufactured by Zhejiang Hisun Biomaterials Co., Ltd., and "SUPLA" (trade name) manufactured by SUPLA Material Technology Co., Ltd.

The weight average molecular weight of the polylactic acid-based resin is preferably 50,000 or more, more preferably 100,000 or more, and further more preferably 150,000 or more, from the viewpoint of heat resistance, and is preferably 600,000 or less, more preferably 550,000 or less, and further more preferably 500,000 or less, from the viewpoint of molding processability and compatibility with the block copolymer (I). That is, the weight average molecular weight of the polylactic acid-based resin is preferably 50,000 to 600,000, more preferably 100,000 to 550,000, and further more preferably 150,000 to 500,000.

The weight average molecular weight of the polylactic acid-based resin can be determined by gel permeation chromatography (GPC) measurement in terms of standard polystyrene. Further, when a commercially available product is used, a catalog value may be adopted.

<Content Ratio>

<<First Embodiment>>

The resin composition according to the first embodiment of the present invention contains the block copolymer (I) in an amount of preferably 85% by mass or more and less than 100% by mass, more preferably 90% by mass or more and less than 100% by mass, further more preferably 92% by mass or more and less than 100% by mass, still further more preferably 96% by mass or more and less than 100% by mass, still further more preferably 98% by mass or more and less than 100% by mass, and still further more preferably 98% by mass or more and less than 100% by mass, with respect to 100% by mass of the total of the block copolymer (I) and the cyclic ester compound (II). When the content ratio is as described above, the resin composition can be even more excellent in heat resistance, tensile properties, and transparency.

The resin composition according to the first embodiment of the present invention contains 0.01 to 15% by mass of the cyclic ester compound (II) with respect to 100% by mass of the total of the block copolymer (I) and the cyclic ester compound (II). From the viewpoint of obtaining a resin composition excellent in the balance of crystallinity, tensile properties, transparency, and heat resistance, the content of the cyclic ester compound (II) with respect to 100% by mass of the total of the block copolymer (I) and the cyclic ester compound (II) in the resin composition according to the first embodiment is preferably 0.02% by mass or more, more preferably 0.04% by mass or more, further more preferably 0.1% by mass or more, still further more preferably 0.2% by mass or more, and still further more preferably 0.3% by mass or more, and preferably 12% by mass or less, more preferably 8% by mass or less, further more preferably 4% by mass or less, still further more preferably 3% by mass or less, and still further more preferably 1% by mass or less. The content of the cyclic ester compound (II) can be determined by gas chromatography, and specifically, can be measured by a method described in Examples. That is, the content of the cyclic ester compound (II) with respect to 100% by mass of the total of the block copolymer (I) and the cyclic ester compound (II) in the resin composition according to the first embodiment is preferably 0.02% by mass or more and 12% by mass or less, more preferably 0.04% by mass or more and 8% by mass or less, further more preferably 0.1% by mass or more and 4% by mass or less, further more preferably 0.2% by mass or more and 3% by mass or less, and further more preferably 0.3% by mass or more and 1% by mass or less.

The resin composition according to the first embodiment of the present invention contains the block structural unit (A) in an amount of preferably 4 to 95% by mass, more preferably 8 to 80% by mass, further more preferably 12 to 70% by mass, and still further more preferably 17 to 60% by mass, with respect to 100% by mass of the total of the block copolymer (I) and the cyclic ester compound (II). When the content ratio is as described above, the resin composition can be even more excellent in heat resistance and tensile properties.

The resin composition according to the first embodiment of the present invention contains the block structural unit (B) in an amount of preferably 4 to 95% by mass, more preferably 8 to 80% by mass, further more preferably 12 to 70% by mass, and still further more preferably 17 to 60% by mass, with respect to 100% by mass of the total of the block copolymer (I) and the cyclic ester compound (II). When the content ratio is as described above, the resin composition can be even more excellent in heat resistance and tensile properties.

The total content ratio of the block copolymer (I) and the cyclic ester compound (II) in the resin composition according to the first embodiment of the present invention is preferably 85% by mass or more, more preferably 90% by mass or more, further more preferably 95% by mass or more, still further more preferably 98% by mass or more, and still further more preferably 99% by mass or more. The total content ratio of the block copolymer (I) and the cyclic ester compound (II) in the resin composition according to the first embodiment may be 100% by mass or less. When the content ratio is as described above, the effect of the present invention is more remarkably exhibited.

<<Second Embodiment>>

The resin composition according to the second embodiment of the present invention contains the block copolymer (I) in an amount of preferably 0.5 to 50% by mass, more preferably 1 to 40% by mass, further more preferably 1.5 to 30% by mass, and still further more preferably 2 to 20% by mass, with respect to 100% by mass of the total of the block copolymer (I), the cyclic ester compound (II), and the aliphatic polyester-based resin (III). When the content ratio is as described above, a resin composition can be even more excellent in biodegradability, heat resistance, and transparency.

The resin composition according to the second embodiment of the present invention contains the block copolymer (I) in an amount of preferably 0.5 to 50% by mass, more preferably 1 to 40% by mass, further more preferably 1.5 to 30% by mass, and still further more preferably 2 to 20% by mass, with respect to 100% by mass of the total of the block copolymer (I) and the aliphatic polyester-based resin (III). When the content ratio is as described above, a resin composition can be even more excellent in biodegradability, heat resistance, and transparency.

The resin composition according to the second embodiment of the present invention contains the cyclic ester compound (II) in an amount of preferably 0.005 to 10% by mass, more preferably 0.01 to 10% by mass, further more preferably 0.015 to 5% by mass, still further more preferably 0.025 to 3% by mass, and still further more preferably 0.03 to 2% by mass, with respect to 100% by mass of the total of the block copolymer (I), the cyclic ester compound (II), and the aliphatic polyester-based resin (III), from the viewpoint of obtaining a resin composition more excellent in the balance of biodegradability, heat resistance, and transparency.

Note that, the content of the cyclic ester compound (II) can be determined by gas chromatography, and specifically, can be measured by the method described in Examples.

The resin composition according to the second embodiment of the present invention contains the aliphatic polyester-based resin (III) in an amount of preferably 50 to 99.5% by mass, more preferably 60 to 99% by mass, further more preferably 70 to 98.5% by mass, and still further more preferably 80 to 98% by mass, with respect to 100% by mass of the total of the block copolymer (I), the cyclic ester compound (II), and the aliphatic polyester-based resin (III). When the content ratio is as described above, a resin composition can be even more excellent in biodegradability, heat resistance, and transparency.

The resin composition according to the second embodiment of the present invention contains the aliphatic polyester-based resin (III) in an amount of preferably 50 to 99.5% by mass, more preferably 60 to 99% by mass, further more preferably 70 to 98.5% by mass, and still further more preferably 80 to 98% by mass, with respect to 100% by mass of the total of the block copolymer (I) and the aliphatic polyester-based resin (III). When the content ratio is as described above, a resin composition can be even more excellent in biodegradability, heat resistance, and transparency.

The resin composition according to the second embodiment of the present invention contains the block structural unit (A) in an amount of preferably 0.1 to 40% by mass, more preferably 0.3 to 30% by mass, further more preferably 0.5 to 25% by mass, and still further more preferably 1 to 15% by mass, with respect to 100% by mass of the total of the block copolymer (I), the cyclic ester compound (II), and the aliphatic polyester-based resin (III). When the content ratio is as described above, a resin composition can be more excellent in heat resistance and transparency.

The resin composition according to the second embodiment of the present invention contains the block structural unit (B) in an amount of preferably 0.2 to 40% by mass, more preferably 0.5 to 30% by mass, further more preferably 1 to 20% by mass, and still further more preferably 1.5 to 15% by mass, with respect to 100% by mass of the total of the block copolymer (I), the cyclic ester compound (II), and the aliphatic polyester-based resin (III). When the content ratio is as described above, the resin composition can be even more excellent in biodegradability and heat resistance.

The total content of the block copolymer (I), the cyclic ester compound (II), and the aliphatic polyester-based resin (III) in the resin composition according to the second embodiment of the present invention is preferably 80% by mass or more, more preferably 85% by mass or more, further more preferably 90% by mass or more, still further more preferably 95% by mass or more, and still further more preferably 98% by mass or more. The total content of the block copolymer (I), the cyclic ester compound (II), and the aliphatic polyester-based resin (III) in the resin composition according to the second embodiment of the present invention may be 100% by mass or less. When the content ratio is as described above, the effect of the present invention is more remarkably exhibited.

<Other Components>

The resin composition according to the first embodiment of the present invention may contain a plasticizer, a resin other than the block copolymer (I) and the aliphatic polyester-based resin (III), an additive, and the like, in addition to the block copolymer (I) and the cyclic ester compound (II). Further, the resin composition according to the second embodiment of the present invention may contain a plasticizer, a resin other than the block copolymer (I) and the aliphatic polyester-based resin (III), an additive, and the like, in addition to the block copolymer (I), the cyclic ester compound (II), and the aliphatic polyester-based resin (III).

<<Plasticizer>>

A plasticizer may be contained for the purpose of adjusting the viscosity of the resin composition to a viscosity suitable for molding or for the purpose of obtaining a molded product having a desired hardness or the like. The plasticizer is not particularly limited, and is preferably a plasticizer having biodegradability in any environment of industrial compost, household compost, soil, and the sea. Suitable examples include a plant ester such as rapeseed oil and castor oil, a synthetic ester such as triacetin, diethyl phthalate and triethyl citrate, a polyol such as ethylene glycol and trimethylolpropane and a derivative thereof, and sugars such as sorbitol. One kind of these may be used alone, or two or more kinds thereof may be used in combination.

When the plasticizer is used, the content of the plasticizer in the resin composition may be appropriately determined depending on the desired physical properties of the resin composition.

<<Resin Other than Block Copolymer (I) and Aliphatic Polyester-Based Resin (III)>>

The resin other than the block copolymer (I) and the aliphatic polyester-based resin (III) is not particularly limited, and is preferably a resin having biodegradability in any environment of industrial compost, household compost, soil, and the sea. Suitable examples thereof include polyvinyl alcohol, a cellulose resin such as cellulose acetate, starch and an esterified product thereof, and 4-nylon. One kind of these may be used alone, or of two or more kinds thereof may be used in combination.

When the resin other than the block copolymer (I) and the aliphatic polyester-based resin (III) is used, the content of the resin in the resin composition may be appropriately determined depending on the desired physical properties of the resin composition.

<<Additive>>

Examples of the additive include an inorganic filler, a softening agent, a heat aging inhibitor, an antioxidant, a hydrolysis inhibitor, a light stabilizer, an antistatic agent, a mold release agent, a flame retardant, a foaming agent, a pigment, a dye, a whitener, an ultraviolet absorber, and a lubricant. One kind of these may be used alone, or two or more kinds thereof may be used in combination.

When the additive is used, the content of the additive in the resin composition may be appropriately determined according to the desired physical properties of the resin composition.

<Crystal Melting Enthalpy of Resin Composition>

From the viewpoint of heat resistance, the crystal melting enthalpy of the resin composition according to the first embodiment of the present invention is preferably higher than the crystal melting enthalpy of the block copolymer (I). The increase rate (($\Delta$Hm2/$\Delta$Hm1) $\times$ 100 - 100 (%)) of the crystal melting enthalpy ($\Delta$Hm2) of the resin composition according to the first embodiment of the present invention with respect to the crystal melting enthalpy ($\Delta$Hm1) of the block-copolymer (I) is preferably 0.5% or more, more preferably 1.0% or more, further more preferably 2.0% or more, still further more preferably 5.0% or more, and still further more preferably 10.0% or more. The upper limit of the increase rate is not particularly limited, and may be 500% or less, 300% or less, 200% or less, 100% or less, 50% or less, or 20% or less.

From the viewpoint of heat resistance, the crystal melting enthalpy of the resin composition according to the second embodiment of the present invention is preferably higher than the crystal melting enthalpy of a mixture of the block copolymer (I) and the aliphatic polyester (III) (a mixture of the block copolymer (I) and the aliphatic polyester (III) at the same ratio as the block copolymer (I) and the aliphatic polyester (III) contained in the resin composition for comparison). The increase rate (($\Delta$Hm2/$\Delta$Hm1) $\times$ 100 - 100 (%)) of the crystal melting enthalpy ($\Delta$Hm2) of the resin composition

**EP 4 722 295 A1**

according to the second embodiment of the present invention with respect to the crystal melting enthalpy (ΔHm1) of the mixture is preferably 0.2% or more, more preferably 0.5% or more, further more preferably 1.0% or more, still further more preferably 3.0% or more, and still further more preferably 5.0% or more. The upper limit of the increase rate is not particularly limited, and may be 300% or less, 200% or less, 100% or less, 50% or less, 20% or less, or 10% or less.

The crystal melting enthalpy of the resin composition can be determined by a differential scanning calorimeter, and specifically, can be measured by a method described in Examples.

<Melting Point of Resin Composition>

The melting point of the resin composition according to the first embodiment of the present invention is a temperature higher than the melting point of the block copolymer (I) by preferably 0.1°C or higher, more preferably 0.3°C or higher, further more preferably 0.5°C or higher, still further more preferably 0.8°C or higher, still further more preferably 1.0°C or higher, still further more preferably 1.5°C or higher, and still further more preferably 2.0°C or higher, from the viewpoint of heat resistance.

The upper limit of the difference between the melting point of the resin composition according to the first embodiment of the present invention and the melting point of the block copolymer (I) is not particularly limited, and may be 70°C or lower, 50°C or lower, 30°C or lower, 10°C or lower, or 5°C or lower.

The melting point of the resin composition can be determined by a differential scanning calorimeter, and specifically, can be measured by a method described in Examples.

<Glass Transition Temperature of Resin Composition >

When the aliphatic polyester-based resin (III) is a polylactic acid-based resin, the glass transition temperature of the resin composition according to the second embodiment of the present invention is preferably 50°C or higher, more preferably 55°C or higher, further more preferably 58°C or higher, further more preferably 59°C or higher, and further more preferably 60°C or higher, from the viewpoint of heat resistance, and is preferably 75°C or lower, and more preferably 70°C or lower, from the viewpoint of processability. In addition, from the viewpoint of heat resistance, the temperature is preferably 0.1°C or higher, more preferably 0.3°C or higher, further more preferably 0.5°C or higher, and still further more preferably 1.0°C or higher than the glass transition temperature of a mixture of the block copolymer (I) and the aliphatic polyester (III) (a mixture of the block copolymer (I) and the aliphatic polyester (III) at the same ratio as the block copolymer (I) and the aliphatic polyester (III) contained in the resin composition for comparison).

The upper limit of the difference between the glass transition temperature of the resin composition according to the second embodiment of the present invention and the glass transition temperature of the block copolymer (I) is not particularly limited, and may be 50°C or lower, 30°C or lower, 10°C or lower, 5°C or lower, or 3°C or lower.

The glass transition temperature of the resin composition can be determined by a differential scanning calorimeter, and specifically, can be measured by a method described in Examples.

<Elongation at Break of Resin Composition>

The retention rate of elongation at break of the resin composition according to the first embodiment of the present invention determined by the following formula (1) is preferably 90% or more, more preferably 95% or more, further more preferably 97% or more, still further more preferably 99% or more, and still further more preferably 100% or more, from the viewpoint of moldability, and the upper limit is not particularly limited, and may be 3000% or less, may be 2000% or less, may be 1000% or less, may be 500% or less, may be 300% or less, may be 200% or less, may be 150% or less, or may be 120% or less.

Elongation at Break (T2) of Resin Composition According to First Embodiment of Present Invention/Elongation at Break (T1) of Block Copolymer (I) × 100 (%)     (1)

Note that, in the present specification, the "elongation at break" is obtained by preparing a pressed sheet having a thickness of 100 μm at 140°C, 40 kN, and 1 min using the resin composition or the block copolymer (I), annealing the pressed sheet at 110°C for 3 hours, and then punching it into a dumbbell-shaped No. 3 type to prepare a test piece, and then using and measuring the test piece at a tensile speed of 5 mm/minute in accordance with JIS K7161-1:2014, and can be measured by the method described in the examples.

15

<<Haze Change Rate of Resin Composition>>

From the viewpoint of visibility, the change rate (%) of the haze (absolute value) of the resin composition according to the first embodiment of the present invention with respect to the haze (absolute value) of the block copolymer (I) is preferably 99% or less, more preferably 97% or less, further more preferably 95% or less, still further more preferably 90% or less, and still further more preferably 85% or less. The lower limit is not particularly limited and may be 0.1% or more, more preferably 1% or more, further more preferably 10% or more, further more preferably 50% or more, and further more preferably 80% or more.

Note that, in the present specification, the change rate (%) of the haze (absolute value) of the resin composition according to the first embodiment of the present invention with respect to the haze (absolute value) of the block copolymer (I) is measured and calculated by the following methods (I) to (iii).

(i) Using the resin composition according to the first embodiment, a pressed sheet having a thickness of 125 $\mu$m is prepared at 140°C, 40 kN, and 1 min to obtain a sheet for measurement (s2). Further, regarding the block copolymer(I), a sheet for measurement (s1) is obtained by the same method.
(ii) The haze of each of the obtained sheets for measurement (s1) and (s2) is measured in accordance with JIS K7136:2000 using a haze meter "HZ-1" (manufactured by Suga Test Instruments Co., Ltd.).
(iii) Using the obtained haze of the sheet for measurement (s1) (sheet for measurement (S1)) and haze of the sheet for measurement (s2) (sheet for measurement (S2)), the change rate (%) of the haze (absolute value) of the resin composition according to the first embodiment of the present invention (sheet for measurement (S2)) with respect to the haze (absolute value) of the block copolymer (I) (sheet for measurement (S1)) is determined from the following formula (2).

$$\text{(Sheet for measurement (S2)/Sheet for measurement (S1))} \times 100 \ (\%) \quad (2)$$

From the viewpoint of visibility, the change rate (%) of the haze (absolute value) of the resin composition according to the second embodiment of the present invention with respect to the haze (absolute value) of a mixture of the block copolymer (I) and the aliphatic polyester (III) (a mixture of the block copolymer (I) and the aliphatic polyester (III) at the same ratio as the block copolymer (I) and the aliphatic polyester (III) contained in the resin composition according to the second embodiment of the present invention for comparison) is preferably 99% or less, more preferably 97% or less, further more preferably 95% or less, still further more preferably 90% or less, and still further more preferably 85% or less. The lower limit is not particularly limited, and may be 0.1% or more, may be 1% or more, may be 10% or more, may be 50% or more, or may be 80% or more.

Note that, in the present specification, the change rate (%) of the haze (absolute value) of the resin composition according to the second embodiment of the present invention with respect to the haze (absolute value) of the mixture of the block copolymer (I) and the aliphatic polyester (III) is measured and calculated by the following methods (iv) to (vi).

(iv) Regarding the resin composition according to the second embodiment, using a depressurized heat press apparatus ("IMC-183B" manufactured by Imoto Machinery Co., Ltd.), the pressure is reduced to 0.1 MPaG using an oil rotary pump, and the resin composition is preheated at 200°C for 5 minutes and then pressed at 40 kN for 1 minute. Thereafter, it is pressed for 1 minute at 20 kgf/cm$^2$ with a cold press apparatus equipped with water flow cooler to prepare a pressed sheet having a thickness of 0.125 mm. The obtained pressed plate is cut into a square piece of 50 $\times$ 50 mm and processed by crystallization in a constant temperature bath at 110°C for 3 hours to obtain a sheet for measurement (s2'). A sheet for measurement (s1') is also obtained by the same method for the mixture of the block copolymer (I) and the aliphatic polyester (III) (the mixture of the block copolymer (I) and the aliphatic polyester (III) at the same ratio as the block copolymer (I) and the aliphatic polyester (III) contained in the resin composition according to the second embodiment of the present invention for comparison).
(v) The haze of each of the obtained sheets for measurement (s1') and (s2') is measured in accordance with JIS-K7136:2000 using "Spectral Haze Meter SH7000" manufactured by Nippon Denshoku Industries Co., Ltd. (illuminant D65).
(vi) Using the haze of the obtained sheet for measurement (s1') (sheet for measurement (S1')) and the haze of the sheet for measurement (s2') (sheet for measurement (S2')), the change rate (%) of the haze (absolute value) of the resin composition according to the second embodiment of the present invention (sheet for measurement (S2')) with respect to the haze (absolute values) of the mixture of the block copolymer (I) and the aliphatic polyester (III) (a mixture of the block copolymer (I) and the aliphatic polyester (III) at the same ratio as the block copolymer (I) and the aliphatic polyester (III) contained in the resin composition according to the second embodiment of the present invention for comparison) (sheet for measurement (S1')) is determined from the following formula (3).

(Sheet for measurement (S2')/Sheet for measurement (S1')) × 100 (%) (3)

Specifically, the haze can be measured by a method described in Examples.

[Method for Producing Resin Composition]

The method for producing the resin composition according to the first embodiment of the present invention is not particularly limited, and the block copolymer (I), the cyclic ester compound (II), and an additive as necessary may be uniformly mixed.

In addition, the method for producing the resin composition according to the second embodiment of the present invention is not particularly limited, and the block copolymer (I), the cyclic ester compound (II), the aliphatic polyester-based resin (III), and an additive as necessary may be uniformly mixed.

In the first embodiment and the second embodiment, the cyclic ester compound (II) may be synthesized simultaneously during the synthesis of the block copolymer (I) and mixed with the block copolymer (I).

Examples of the mixing method include a method of melt-kneading using a single-screw extruder, a multi-screw extruder, a Banbury mixer, a heating roll, a Brabender, various kneaders, or the like, or a method of melt-kneading by supplying each component from a separate charging port.

Further, preblending may be performed before melt-kneading. Examples of the preblending method include a method using a mixer such as a Henschel mixer, a high speed mixer, a V blender, a ribbon blender, a tumbler blender, or a conical blender. The temperature at the time of melt-kneading can be arbitrarily selected preferably in the range of 140 to 220°C in consideration of the melting points and decomposition temperatures of the block copolymer (I) and the cyclic ester compound (II).

Examples

Hereinafter, the present invention is specifically described with reference to Examples and Comparative Examples, but the present invention is not limited thereto.

The compounds used in Examples and Comparative Examples are as follows.

3-methyl-1,5-pentanediol (manufactured by Kuraray Co., Ltd.)
Adipic acid (manufactured by Tokyo Chemical Industry Co., Ltd.)
Tin octylate (manufactured by Tokyo Chemical Industry Co., Ltd.)
Toluene (manufactured by Kishida Chemical Co., Ltd.)
L-lactide (manufactured by Tokyo Chemical Industry Co., Ltd.)
Methanol (manufactured by FUJIFILM Wako Pure Chemical Corporation)
2,4-diethyl-1,5-pentanediol (manufactured by Tokyo Chemical Industry Co., Ltd.)
2-methyl-1,3-propanediol (manufactured by Tokyo Chemical Industry Co., Ltd.)
Succinic acid (manufactured by Tokyo Chemical Industry Co., Ltd.)
1,4-butanediol (manufactured by Tokyo Chemical Industry Co., Ltd.)
Propylene glycol (manufactured by Tokyo Chemical Industry Co., Ltd.)
Di-n-alkyl Adipate [Plasticizer] (manufactured by Tokyo Chemical Industry Co., Ltd.)
N,N'-Ethylenebisoctadecanamide [mixture of fatty acid amides] [consists of $C_{14}$, $C_{16}$ and $C_{18}$] (manufactured by Tokyo Chemical Industry Co., Ltd.)

The physical properties of polymers and resin compositions in Examples and Comparative Examples were measured or evaluated by the following methods.

(1) Number Average Molecular Weight (Mn)

The number average molecular weight (Mn) of the polymer was determined in terms of standard polystyrene by gel permeation chromatography (GPC). Further, the Mn of the block structural unit (B) was determined from the Mn of the block copolymer (I) and the mass content of the block structural unit (B).

<GPC Measurement Condition>

Apparatus: GPC apparatus "HLC-8220" manufactured by Tosoh Corporation
Separation column: "TSKgel SuperMultiporeHZ-M (column diameter = 4.6 mm, column length = 15 cm)" manufactured by Tosoh Corporation (two columns were connected in series and used)
Eluent: Tetrahydrofuran (THF)
Eluent flow rate: 0.35 mL/minute
Column temperature: 40°C
Detection method: Differential refractive index (RI)
Injection amount: 10 μL
Concentration: 1 mg/l mL (block copolymer or polymer/THF)

(2) Hard Ratio (% by Mass) (Mass Content of Block Structural Unit (A) Having Polylactic Acid Unit (a) as Main Component)

The hard ratio of the block polymer was calculated by $^1$H-NMR. The molar ratio of the block structural unit (A) and the block structural unit (B) was calculated from the area ratio of the signal near the 5.2 ppm derived from the polylactic acid unit and the signal near the 0.9 ppm derived from the structural unit (B) having the polyester unit (b) as a main component in the obtained spectrum. The molar ratio was multiplied by the molecular weight of the block structural unit to obtain a mass ratio, and the mass ratio of (A) when the total of the mass ratios was adjusted to 100 was defined as the hard ratio.

<$^1$H-NMR Measurement Condition>

Apparatus: Nuclear magnetic resonance device "JNM-ECX400" manufactured by JEOL Ltd.
Solvent: Deuterated chloroform
Measurement temperature: 50°C
Accumulated number of times: 1024 times
Measurement condition: Temperature increase rate 10°C/ min

(3) Biodegradability (Compost)

Biodegradability in compost was measured according to ISO 14855-2:2018.
In Examples 1 to 10 and Comparative Examples 1 to 10, when the decomposition rate after 15 days was 20% by mass or more, it was evaluated as A, in a case of 10% by mass or more and less than 20% by mass, it was evaluated as B, and in a case of 5% by mass or more and less than 10% by mass, it was evaluated as C.
In Examples 11 to 24 and Comparative Examples 11 to 15, when a decomposition rate after 15 days was 10% by mass or more, it was evaluated as A, and in a case of less than 10% by mass, it was evaluated as B.

(4) Biodegradability (Activated Sludge)

Biodegradability in activated sludge was measured in accordance with ISO 14851:2019. When a decomposition rate after 90 days was 5% by mass or more, it was evaluated as A, and in a case of less than 5% by mass, it was evaluated as B.

(5) Elongation at Break

Using the resin composition obtained in each of Examples and Comparative Examples, a pressed sheet having a thickness of 100 μm was prepared at 140°C, 40 kN, and 1 min, and the pressed sheet was annealed at 110°C for 3 hours, and then punched into a dumbbell-shaped No. 3 type to prepare a test piece. Using the test piece, measurement was performed at a tensile speed of 5 mm/minute in accordance with JIS K7161-1:2014. In addition, with respect to the block copolymer (I) and the polymer obtained in each of Examples and Comparative Examples, a test piece was prepared in the same manner, and the measurement was performed in the same manner.
In addition, regarding Examples 1 to 12 and Comparative Examples 6 and 7, the retention rate of elongation at break was calculated from the following formula (I-i).

Elongation at break of resin composition (T2)/elongation at break of block copolymer alone contained in resin composition (T1) $\times$ 100 (%) (I-i)      (I-i)

(6) Glass Transition Temperature (°C), Melting Point (°C), and Crystal Melting Enthalpy (J/g)

The glass transition temperature, melting point, and crystal melting enthalpy of each of the block copolymer, the polymer, the resin composition, and the mixtures A of the block copolymer and the aliphatic polyester (a mixture of the block copolymer and the aliphatic polyester at the same ratio as the block copolymer and the aliphatic polyester contained in the resin composition for comparison) were measured by differential scanning calorimetry in accordance with JIS K7121:2012. Specifically, the glass transition temperature (°C), the melting point (°C), and crystal melting enthalpy (J/g) were measured in a 2nd run under the following measuring condition. Note that, in the present specification, the midpoint glass transition temperature in JIS K7121:2012 is defined as the glass transition temperature, and the heat of fusion in the melting curve at the time of 2nd run is defined as the crystal melting enthalpy.

<Measurement Condition of Glass Transition Temperature (°C), Melting Point (°C), and Crystal Melting Enthalpy (J/g)>

Apparatus: Differential scanning calorimeter "DSC822" manufactured by Mettler-Toledo.

A sample to be measured (the block copolymer, polymer, or resin composition) at 25°C was heated to 200°C at a temperature increase rate of 10°C/min (1st run), held at 200°C for 5 minutes, cooled from 200°C to 75°C at a temperature decrease rate of 10°C/min, and held at 75°C for 30 minutes (crystallization). Subsequently, it was cooled from 75°C to -50°C at a temperature decrease rate of 10°C/min, cooled from -50°C to -75°C at a temperature decrease rate of 5°C/min, and held at -75°C for 5 minutes. Subsequently, it was heated from -75°C to 250°C at a temperature increase rate of 10°C/min (2nd run).

Further, regarding Examples 1 to 24 and Comparative Examples 6, 7, 13, and 14, the increase rate $((\Delta Hm2/\Delta Hm1) \times 100 - 100 \ (\%))$ of the crystal melting enthalpy ($\Delta Hm2$) of the resin composition with respect to the crystal melting enthalpy ($\Delta Hm1$) of the block copolymer contained in the resin composition was calculated.

In addition, regarding Examples 13 to 24 and Comparative Examples 13 and 14, the temperature increase (Tg2 - Tg1 (°C)) of the glass transition temperature (Tg2) of the resin composition with respect to the glass transition temperature (Tg1) of the mixture A was calculated.

(8) Haze

In Examples 1 to 12 and Comparative Examples 1 to 10, the haze was measured by the following methods (i) to (iii), and the change rate of the haze was calculated.

(i) Using the obtained resin composition, a pressed sheet having a thickness of 125 $\mu$m was prepared at 140°C, 40 kN, and 1 min to obtain a sheet for measurement (s2). Further, regarding the block copolymer (I), a sheet for measurement (s1) was obtained by the same method.

(ii) The haze of each of the obtained sheets for measurement (s1) and (s2) was measured in accordance with JIS K7136:2000 using a haze meter "HZ-1" (manufactured by Suga Test Instruments Co., Ltd.).

(iii) Using the haze of the obtained sheet for measurement (s1) (sheet for measurement (S1)) and the haze of the sheet for measurement (s2) (sheet for measurement (S2)), the change rate (%) of the haze (absolute value) of the resin composition according to the first embodiment of the present invention (sheet for measurement (S2)) with respect to the haze (absolute value) of the block copolymer (I) (sheet for measurement (S1)) was determined from the following formula (2).

$$(\text{Sheet for measurement (S2)/Sheet for measurement (S1)}) \times 100 \ (\%) \quad (2)$$

In Examples 13 to 24 and Comparative Examples 11 to 15, the haze was measured by the following methods (iv) to (vi), and the change rate of the haze was calculated.

(iv) Regarding the obtained resin composition, using a depressurized heat press apparatus ("IMC-183B" manufactured by Imoto Machinery Co., Ltd.), the pressure was reduced to 0.1 MPaG using an oil rotary pump, and the resin composition was preheated at 200°C for 5 minutes and then pressed at 40 kN for 1 minute. Thereafter, it was pressed for 1 minute at 20 kgf/cm$^2$ with a cold press equipped with water flow cooler to prepare a pressed plate with a thickness of 0.125 mm. The obtained pressed plate was cut into a square piece of 50 $\times$ 50 mm and processed by crystallization in a constant temperature bath at 110°C for 3 hours to obtain a sheet for measurement (s2'). In addition, a sheet for measurement (s1') was also obtained by the same method for a mixture A of the block copolymer and the aliphatic polyester (a mixture of the block copolymer and the aliphatic polyester at the same ratio as the block copolymer and the aliphatic polyester contained in the resin composition for comparison).

(v) The haze of each of the obtained sheets for measurement (s1') and (s2') was measured in accordance with JIS K7136:2000 using "Spectral Haze Meter SH7000" manufactured by Nippon Denshoku Industries Co., Ltd. (illuminant D65).

(vi) Using the haze of the obtained sheet for measurement (s1') (sheet for measurement (S1')) and the haze of the sheet for measurement (s2') (sheet for measurement (S2')), the change rate (%) of the haze (absolute value) of the resin composition according to the second embodiment of the present invention (sheet for measurement (S2')) with respect to the haze (absolute value) of the mixture A (sheet for measurement (S1')) was determined from the following formula (3).

$$\text{(Sheet for measurement (S2')/Sheet for measurement (S1'))} \times 100 \, (\%) \quad (3)$$

(9) Gas Chromatography

Using the resin composition obtained in each of Examples and Comparative Examples, gas chromatography measurement was performed under the following measurement conditions, the area ratio (GC%) of the cyclic ester compound was determined by gas chromatography analysis, and then the content of the cyclic ester compound in the resin composition was calculated by an absolute calibration curve method.

<Measurement Condition of Gas Chromatography>

Apparatus: "GC-2014" manufactured by Shimadzu Corporation
Column: "DB-1" manufactured by Agilent Technologies Japan, Ltd. (internal diameter: 0.25 mm, length: 30.0 m, film thickness: 1.00 $\mu$m)
Carrier gas: Helium (120.0 kPaG) was flowed at a flow rate of 1.36 mL/min.
Detector: FID
Analysis condition: Injection temperature: 200°C, Detection temperature: 250°C
Temperature increase condition: Temperature increase of, 50 to 110°C; 10°C/min, 110 to 180°C; 40°C/min, 180 to 280°C; 10°C/min

[Example 1]

Into a flask equipped with an instrument capable of distilling off a generated liquid and ensuring a distillate and a vacuum pump, 3-methyl-1,5-pentanediol and adipic acid were charged at a molar ratio of 3-methyl-1 5-pentanediol/adipic acid = 1.1/1, tin octylate was further added in an amount of 0.1% by mass with respect to the total amount of 3-methyl-1,5-pentanediol and adipic acid, and the mixture was heated under a nitrogen atmosphere at normal pressure and 160°C for 3 hours, and further heated at 220°C for 3 hours to perform a reaction while distilling off water. Here, the distillate was stored separately. Next, after the pressure was reduced to 2,000 Pa and the reaction was performed for 3 hours, the pressure was reduced to 80 Pa and the reaction was performed while appropriately checking until the number average molecular weight reached 9,500, thereby synthesizing a polymer composed of a structural unit (B') having a polyester unit as a main component.

After completion of the reaction, the pressure was returned to normal pressure, the temperature was lowered to 80°C, toluene was added to dilute the reactant so that the solid content was 40% by mass, and the toluene solution was charged into methanol in an amount twice the total amount of the solution. The supernatant was discarded, and methanol in the same amount as the amount of the toluene solution charged was added again for washing. The supernatant was discarded, and the collected insoluble matter was dried in a condition of a temperature of 40°C using a vacuum dryer to remove the organic volatile content, thereby obtaining a polymer composed of a structural unit (B') having a polyester unit (b) as a main component.

Toluene was added again to the purified polymer composed of the structural unit (B') to dilute the toluene solution of the polymer composed of the structural unit (B') so that the solid content thereof was 33% by mass, and then the temperature was raised to 140°C to distill off 10% by mass of the amount of toluene added, thereby dehydrating the inside of the system.

Thereafter, the toluene solution of the polymer composed of the structural unit (B') was cooled to 80°C, the polymer composed of the structural unit (B') and L-lactide were added to be the polymer composed of the structural unit (B')/L-lactide = 50/50, and toluene was further added in the above-mentioned distilled amount to adjust the solid content of the toluene solution of the polymer composed of the structural unit (B') and L-lactide to 50% by mass. Thereafter, when the temperature of the solution was raised to 100°C, tin octylate was added in an amount of 0.1% by mass to the polymer composed of the structural unit (B'), and the mixture was reacted for 4 hours to synthesize a block copolymer (I) composed of a block structural unit (A) having a polylactic acid unit (a) as a main component and a block structural unit (B) having a polyester unit (b) as a main component, thereby obtaining a toluene solution of the block copolymer (I).

Toluene was further added to this solution to dilute it to have a solid content of 40% by mass, and then the toluene solution having a solid content of 40% by mass was charged into methanol in an amount twice the total amount of the solution to precipitate a solid. The supernatant methanol was discarded, and methanol in the same amount as the amount of the toluene solution charged was added again for washing. The methanol was discarded, and the collected solid was dried in a condition of 40°C using a vacuum dryer to remove the organic volatile content, thereby obtaining a block copolymer (I-1) composed of a block structural unit (A) having a polylactic acid unit (a) as a main component and a block structural unit (B) having a polyester unit (b) as a main component.

The number average molecular weight (Mn) of the obtained block copolymer (I) was 19,000.

In addition, the distillation residue obtained when the polymer composed of the structural unit (B') was synthesized, toluene, and water were charged into a separatory funnel at a mass ratio of the distillation residue/toluene/water = 1/10/10, and 4-methyl-1,7-dioxacyclotridecane-8,13-dione contained in the distillation residue was extracted into toluene. The toluene layer was added to an eggplant flask and air-dried at 20°C overnight to volatilize toluene, and then dried in a vacuum dryer at 100 Pa and 20°C for 1 hour to obtain a crystal of 4-methyl-1,7-dioxacyclotridecane-8,13-dione as the cyclic ester compound (II).

To a polymer solution obtained by dissolving 19 parts by mass of the obtained block copolymer (I) in 80 parts by mass of toluene, a cyclic ester compound (II) composed of 3-methyl-1,5-pentanediol and adipic acid (4-methyl-1,7-dioxacyclotridecane-8,13-dione) was added in an amount of 0.03 parts by mass with respect to 100 parts by mass of the total of the block copolymer (I) and the cyclic ester compound (II) to obtain a mixed liquid. The mixed liquid was air-dried at 25°C overnight, and then dried in a vacuum dryer set at 40°C for 3 hours to obtain a resin composition containing a cyclic ester compound (II).

The obtained resin composition was subjected to the above-mentioned measurement and evaluation. The results are shown in Table 1.

[Examples 2 to 5]

A resin composition containing a block copolymer (I) composed of a block structural unit (A) having a polylactic acid unit (a) as a main component and a block structural unit (B) having a polyester unit (b) as a main component, and a cyclic ester compound (II) was obtained in the same manner as in Example 1, except that the amount of the cyclic ester compound (II) composed of 3-methyl-1,5-pentanediol and adipic acid (4-methyl-1,7-dioxacyclotridecane-8,13-dione) was changed to the amount shown in Table 1.

The obtained resin composition was subjected to the above-mentioned measurement and evaluation. The results are shown in Table 1.

[Example 6]

A resin composition containing a block copolymer (I) composed of a block structural unit (A) having a polylactic acid unit (a) as a main component and a block structural unit (B) having a polyester unit (b) as a main component, and a cyclic ester compound (II) was obtained in the same manner as in Example 5, except that a polymer composed of a structural unit (B') having a number average molecular weight of 23,800 was synthesized and used.

The obtained resin composition was subjected to the above-mentioned measurement and evaluation. The results are shown in Table 1.

[Example 7]

A resin composition containing a block copolymer (I) composed of a block structural unit (A) having a polylactic acid unit (a) as a main component and a block structural unit (B) having a polyester unit (b) as a main component, and a cyclic ester compound (II) was obtained in the same manner as in Example 5, except that the cyclic ester compound (II) (3-methyl-1,5-dioxacycloundecane-6,11-dione) was used.

The obtained resin composition was subjected to the above-mentioned measurement and evaluation. The results are shown in Table 2.

[Example 8]

A resin composition containing a block copolymer (I) composed of a block structural unit (A) having a polylactic acid unit (a) as a main component and a block structural unit (B) having a polyester unit (b) as a main component, and a cyclic ester compound (II) was obtained in the same manner as in Example 3, except that a polymer composed of a structural unit (B') shown in Table 2 was synthesized and used using 2-methyl-1,3-propanediol instead of 3-methyl-1,5-pentanediol, and the cyclic ester compound (II) (3-methyl-1, 5-dioxacycloundecane-6,11-dione) was used.
The obtained resin composition was subjected to the above-mentioned measurement and evaluation. The results are shown in Table 2.

[Example 9]

A resin composition containing a block copolymer (I) composed of a block structural unit (A) having a polylactic acid unit (a) as a main component and a block structural unit (B) having a polyester unit (b) as a main component, and a cyclic ester compound (II) was obtained in the same manner as in Example 5, except that a polymer composed of a structural unit (B') shown in Table 2 was synthesized and used by using 2-methyl-1,3-propanediol instead of 3-methyl-1,5-pentanediol and adjusting the reaction time, and the cyclic ester compound (II) (3-methyl-1,5-dioxacycloundecane-6,11-dione) was used.
The obtained resin composition was subjected to the above-mentioned measurement and evaluation. The results are shown in Table 2.

[Example 10]

A resin composition containing a block copolymer (I) composed of a block structural unit (A) having a polylactic acid unit (a) as a main component and a block structural unit (B) having a polyester unit (b) as a main component, and a cyclic ester compound (II) was obtained in the same manner as in Example 5, except that a polymer composed of a structural unit (B') shown in Table 2 was synthesized and used by using 2,4-diethyl-1,5-pentanediol instead of 3-methyl-1,5-pentanediol and adjusting the reaction time.
The obtained resin composition was subjected to the above-mentioned measurement and evaluation. The results are shown in Table 2.

[Example 11]

A resin composition containing a block copolymer (I) composed of a block structural unit (A) having a polylactic acid unit (a) as a main component and a block structural unit (B) having a polyester unit (b) as a main component, and a cyclic ester compound (II) was obtained in the same manner as in Example 3, except that a polymer composed of a structural unit (B') shown in Table 2 was synthesized and used by using succinic acid instead of adipic acid and adjusting the reaction time.
The obtained resin composition was subjected to the above-mentioned measurement and evaluation. The results are shown in Table 2.

[Example 12]

A resin composition containing a block copolymer (I) composed of a block structural unit (A) having a polylactic acid unit (a) as a main component and a block structural unit (B) having a polyester unit (b) as a main component, and a cyclic ester compound (II) was obtained in the same manner as in Example 5, except that a polymer composed of a structural unit (B') shown in Table 2 was synthesized and used by using succinic acid instead of adipic acid and adjusting the reaction time.
The obtained resin composition was subjected to the above-mentioned measurement and evaluation. The results are shown in Table 2.

[Comparative Example 1]

A resin composition was obtained in the same manner as in Example 1, except that the cyclic ester compound (II) composed of 3-methyl-1,5-pentanediol and adipic acid was not used.
The obtained resin composition was subjected to the above-mentioned measurement and evaluation. The results are shown in Table 3. The obtained resin composition had a lower melting point value than the resin compositions obtained in Examples. This is considered to be because the resin composition does not contain the cyclic ester compound (II).

[Comparative Example 2]

A resin composition was obtained in the same manner as in Example 7, except that the cyclic ester compound (II) composed of 3-methyl-1,5-pentanediol and adipic acid was not used.
The obtained resin composition was subjected to the above-mentioned measurement and evaluation. The results are shown in Table 3. The obtained resin composition had a lower crystallinity value than the resin compositions obtained in Examples. This is considered to be because the resin composition does not contain the cyclic ester compound (II).

[Comparative Example 3]

A resin composition was obtained in the same manner as in Example 8, except that the cyclic ester compound (II) composed of 3-methyl-1,5-pentanediol and adipic acid was not used.
The obtained resin composition was subjected to the above-mentioned measurement and evaluation. The results are shown in Table 3. The obtained resin composition had a higher haze value and a lower melting point value than the resin compositions obtained in Examples. This is considered to be because the resin composition does not contain the cyclic ester compound (II).

[Comparative Example 4]

A resin composition was obtained in the same manner as in Example 10, except that the cyclic ester compound (II) composed of 2,4-diethyl-1,5-pentanediol and adipic acid was not used.
The obtained resin composition was subjected to the above-mentioned measurement and evaluation. The results are shown in Table 3. The obtained resin composition had a higher haze value and a lower melting point value than the resin compositions obtained in Examples. This is considered to be because the resin composition does not contain the cyclic ester compound (II).

[Comparative Example 5]

A resin composition was obtained in the same manner as in Example 11, except that the cyclic ester compound (II) composed of 3-methyl-1,5-pentanediol and succinic acid was not used.
The obtained resin composition was subjected to the above-mentioned measurement and evaluation. The results are shown in Table 3. The obtained resin composition had a higher haze value and a lower melting point value than the resin compositions obtained in Examples. This is considered to be because the resin composition does not contain the cyclic ester compound (II).

[Comparative Example 6]

A resin composition containing a block copolymer composed of a block structural unit (A) having a polylactic acid unit (a) as a main component and a block structural unit (B) having a polyester unit (b) as a main component, and Di-n-alkyl Adipate was obtained in the same manner as in Example 1, except that Di-n-alkyl Adipate (plasticizer), which is an ester compound having no cyclic structure, was used instead of the cyclic ester compound (II) in an amount of 5 parts by mass with respect to 100 parts by mass of the total of the block copolymer (I) and Di-n-alkyl Adipate.
The obtained resin composition was subjected to the above-mentioned measurement and evaluation. The results are shown in Table 4. The obtained resin composition had a lower elongation at break value than the resin compositions obtained in Examples. This is considered to be because the ester compound having no cyclic structure had a high degree of molecular freedom, and thus the resin composition became too flexible.

[Comparative Example 7]

A resin composition containing a block copolymer composed of a block structural unit (A) having a polylactic acid unit (a) as a main component and a block structural unit (B) having a polyester unit (b) as a main component, and a nucleating agent was obtained in the same manner as in Example 1, except that N,N'-Ethylenebisoctadecanamide as a nucleating agent was used instead of the cyclic ester compound (II) in an amount of 5 parts by mass with respect to 100 parts by mass of the total of the block copolymer (I) and the nucleating agent.
The obtained resin composition was subjected to the above-mentioned measurement and evaluation. The results are shown in Table 4. The obtained resin composition had a lower elongation at break value and a higher haze value than the resin compositions obtained in Examples. This is considered to be due to poor compatibility between the nucleating agent and the block copolymer.

[Comparative Example 8]

A resin composition was obtained in the same manner as in Example 1, except that the cyclic ester compound (II) composed of 3-methyl-1,5-pentanediol and adipic acid was not used.

The obtained resin composition was subjected to the above-mentioned measurement and evaluation. The results are shown in Table 4. The obtained resin composition had a higher haze value and a lower melting point value than the resin compositions obtained in Examples. This is considered to be because the resin composition does not contain the cyclic ester compound (II).

[Comparative Example 9]

A resin composition containing a polymer composed of a structural unit (B') having a polyester unit (b) as a main component and a cyclic ester compound (II) was obtained in the same manner as in Example 1, except that a polymer composed of a structural unit (B') having a polyester unit (b) as a main component was used instead of the block copolymer (I), and the cyclic ester compound (II) composed of 3-methyl-1,5-pentanediol and adipic acid (4-methyl-1,7-dioxacyclotridecane-8,13-dione) was used in an amount of 5.0 parts by mass with respect to 100 parts by mass in total of the polymer composed of the structural unit (B') having a polyester unit (b) as a main component and the cyclic ester compound (II).

The obtained resin composition was subjected to the above-mentioned measurement and evaluation. The results are shown in Table 4. The crystallinity, melting point, elongation at break, and haze of the obtained resin composition could not be measured because the polymer composed of the structural unit (B') having the polyester unit (b) as a main component was a liquid resin. This is considered that this is because the block copolymer (I) contained in the resin composition does not contain the block structural unit (A).

[Comparative Example 10]

Under the condition of 200°C, 0.1% by mass of tin octylate was added to L-lactide, and the mixture was reacted until the number average molecular weight reached 19,000 to obtain polylactic acid (a polymer composed of a structural unit (A) having a polylactic acid unit (a) as a main component).

A resin composition containing the polylactic acid and the cyclic ester compound (II) was obtained in the same manner as in Example 1, except that the obtained polylactic acid was used instead of the block copolymer (I), and the cyclic ester compound (II) composed of 3-methyl-1,5-pentanediol and adipic acid (4-methyl-1,7-dioxacyclotridecane-8,13-dione) was used in an amount of 5.0 parts by mass of the cyclic ester compound (II) with respect to 100 parts by mass of the total of the polylactic acid and the cyclic ester compound (II).

The obtained resin composition was subjected to the above-mentioned measurement and evaluation. The results are shown in Table 4. The obtained resin composition had poor biodegradability, a low elongation at break value, and a high haze value. This is considered to be because the resin composition does not contain the block copolymer (I) containing the structural unit (B') having the flexible polyester unit (b) as a main component.

[Table 1]

Table 1

| Structure | | Example 1 | Example 2 | Example 3 | Example 4 | Example 5 | Example 6 |
|---|---|---|---|---|---|---|---|
| | Structural Unit A-B-A | PLLA-MPD/AA-PLLA | PLLA-MPD/AA-PLLA | PLLA-MPD/AA-PLLA | PLLA-MPD/AA-PLLA | PLLA-MPD/AA-PLLA | PLLA-MPD/AA-PLLA |
| | Mn of Block Structural Unit (B) | 9,500 | 9,500 | 9,500 | 9,500 | 9,500 | 23,800 |
| | Mn of Block Copolymer (I) | 19,000 | 19,000 | 19,000 | 19,000 | 19,000 | 37,300 |
| | Hard Ratio [% by Mass] | 50 | 50 | 50 | 50 | 50 | 33 |
| | Kind of Cyclic Ester Compound (II) | 4-methyl-1,7-dioxa-cyclotridecane-8,13-dione | 4-methyl-1,7-dioxa-cyclotridecane-8,13-dione | 4-methyl-1,7-dioxa-cyclotridecane-8,13-dione | 4-methyl-1,7-dioxa-cyclotridecane-8,13-dione | 4-methyl-1,7-dioxa-cyclotridecane-8,13-dione | 4-methyl-1,7-dioxa-cyclotridecane-8,13-dione |
| | Content of Cyclic Ester Compound (II) [% by Mass][*1] | 0.03 | 0.1 | 0.5 | 1.0 | 5.0 | 5.0 |

| | | Example 1 | Example 2 | Example 3 | Example 4 | Example 5 | Example 6 |
|---|---|---|---|---|---|---|---|
| Resin Composition Evaluation | Crystal Melting Enthalpy [J/g] | 22.1 | 22.7 | 23.8 | 25.5 | 24.6 | 17.9 |
| | Crystal Melting Enthalpy Increase Rate [%] | 2.3 | 5.1 | 10.2 | 18.1 | 13.9 | 22.0 |
| | Melting Point [°C] | 139.3 | 139.8 | 140.5 | 142.5 | 142.9 | 153.0 |
| | Temperature Increase of Melting Point [°C] | 0.5 | 1.0 | 1.7 | 3.7 | 4.1 | 0.2 |
| | Elongation at Break [%] | 12.0 | 12.1 | 12.2 | 12.4 | 12.5 | 262.3 |
| | Retention Rate of Elongation at Break [%] | 99.2 | 100.0 | 100.8 | 102.5 | 103.3 | 100.9 |
| | Haze [%] | 52.7 | 49.8 | 46.3 | 38.6 | 45.6 | 37.2 |
| | Haze Change Rate [%] | 94.4 | 89.2 | 83.0 | 69.2 | 81.7 | 77.0 |
| | Biodegradability in Compost | A | A | A | A | A | A |
| | Biodegradability in Activated Sludge | A | A | A | A | A | A |
| *1: Content of Cyclic Ester Compound (II) with Respect to 100% by Mass of Total of Block Copolymer (I) and Cyclic Ester Compound (II) [% by Mass] | | | | | | | |

EP 4 722 295 A1

[Table 2]

[Table 2]

Table 2

| | | Example 7 | Example 8 | Example 9 | Example 10 | Example 11 | Example 12 |
|---|---|---|---|---|---|---|---|
| Structure | Structural Unit A-B-A | PLLA-MPD/AA-PLLA | PLLA-MPDiol/AA-PLLA | PLLA-MPDiol/AA-PLLA | PLLA-DEPD/AA-PLLA | PLLA-MPD/SA-PLLA | PLLA-MPD/SA-PLLA |
| | Mn of Block Structural Unit (B) | 9,500 | 9,800 | 9,800 | 9,300 | 9,500 | 9,500 |
| | Mn of Block Copolymer (I) | 19,000 | 18,800 | 18,800 | 19,200 | 19,600 | 19,600 |
| | Hard Ratio [% by Mass] | 50 | 50 | 50 | 50 | 50 | 50 |
| | Kind of Cyclic Ester Compound (II) | 3-methyl-1,5-dioxacycloundecane-6,11-dione | 3-methyl-1,5-dioxacycloundecane-6,11-dione | 3-methyl-1,5-dioxacycloundecane-6,11-dione | 2,6-diethyl-1,7-dioxacyclotridecane-8,13-dione | 4-methyl-1,7-dioxacyclotridecane-8,13-dione | 4-methyl-1,7-dioxacyclotridecane-8,13-dione |
| | Content of Cyclic Ester Compound (II) [% by Mass]*1 | 5.0 | 0.5 | 5.0 | 5.0 | 0.5 | 5.0 |

28

|  |  | Example 7 | Example 8 | Example 9 | Example 10 | Example 11 | Example 12 |
|---|---|---|---|---|---|---|---|
| Resin Composition Evaluation | Crystal Melting Enthalpy [J/g] | 24.6 | 22.6 | 24.9 | 24.1 | 19.8 | 22.5 |
|  | Crystal Melting Enthalpy Increase Rate [%] | 13.9 | 2.3 | 12.7 | 13.7 | 2.6 | 16.6 |
|  | Melting Point [°C] | 142.6 | 140.5 | 142.1 | 141.8 | 139.7 | 140.5 |
|  | Temperature Increase of Melting Point [°C] | 3.8 | 1.5 | 3.1 | 3.2 | 1.3 | 2.1 |
|  | Elongation at Break [%] | 12.2 | 15.7 | 15.8 | 11.3 | 25.3 | 26.1 |
|  | Retention Rate of Elongation at Break [%] | 100.8 | 100.6 | 101.3 | 99.1 | 100.8 | 104.0 |
|  | Haze [%] | 43.2 | 51.2 | 44.9 | 43.1 | 43.2 | 47.3 |
|  | Haze Change Rate [%] | 77.4 | 89.2 | 78.2 | 77.9 | 88.7 | 97.1 |
|  | Biodegradability in Compost | A | A | A | A | A | A |
|  | Biodegradability in Activated Sludge | A | A | A | A | A | A |
| *1: Content of Cyclic Ester Compound (II) with Respect to 100% by Mass of Total of Block Copolymer (I) and Cyclic Ester Compound (II) [% by Mass] | | | | | | | |

EP 4 722 295 A1

[Table 3]

Table 3

| Structure | | | Comparative Example 1 | Comparative Example 2 | Comparative Example 3 | Comparative Example 4 | Comparative Example 5 |
|---|---|---|---|---|---|---|---|
| Structure | Structural Unit A-B-A | | PLLA-MPD/AA-PLLA | PLLA-MPD/AA-PLLA | PLLA-MPDiol/AA-PLLA | PLLA-DEPD/AA-PLLA | PLLA-MPD/SA-PLLA |
| | Mn of Block Structural Unit (B) | | 9,500 | 23,800 | 9,800 | 9,300 | 9,500 |
| | Mn of Polymer | | 19,000 | 37,300 | 18,800 | 19,200 | 19,600 |
| | Hard Ratio [% by Mass] | | 50 | 33 | 50 | 50 | 50 |
| | Kind of Cyclic Ester Compound (II) | | - | - | - | - | - |
| | Kind of Other Additives | | - | - | - | - | - |
| | Content of Cyclic Ester Compound (II) [% by Mass][*1] | | 0 | 0 | 0 | 0 | 0 |
| | Content of Other Additives [% by Mass][*2] | | 0 | 0 | 0 | 0 | 0 |

(continued)

| | | Comparative Example 1 | Comparative Example 2 | Comparative Example 3 | Comparative Example 4 | Comparative Example 5 |
|---|---|---|---|---|---|---|
| Resin Composition Evaluation | Crystal Melting Enthalpy [J/g] | 21.6 | 14.67 | 22.1 | 21.2 | 19.3 |
| | Crystal Melting Enthalpy Increase Rate [%] | - | - | - | - | - |
| | Melting Point [°C] | 138.8 | 152.8 | 139.0 | 138.6 | 138.4 |
| | Temperature Increase of Melting Point [°C] | - | - | - | - | - |
| | Elongation at Break [%] | 12.1 | 260.0 | 15.6 | 11.4 | 25.1 |
| | Retention Rate of Elongation at Break [%] | - | - | - | - | - |
| | Haze [%] | 55.8 | 48.3 | 57.4 | 55.3 | 48.7 |
| | Haze Change Rate [%] | - | - | - | - | - |
| | Biodegradability in Compost | A | A | A | A | A |
| | Biodegradability in Activated Sludge | A | A | A | A | A |
| *1: Content of Cyclic Ester Compound (II) with Respect to 100% by Mass of Total of Block Copolymer (I) and Cyclic Ester Compound (II) [% by Mass] *2: Content of Other Additives with Respect to 100% by Mass of Total of Block Copolymer (I) and Other Additives [% by Mass] | | | | | | |

[Table 4]

Table 4

| | | Comparative Example 6 | Comparative Example 7 | Comparative Example 8 | Comparative Example 9 | Comparative Example 10 |
|---|---|---|---|---|---|---|
| Structure | Structural Unit A-B-A | PLLA-MPD/AA-PLLA | PLLA-MPD/AA-PLLA | PLLA-MPD/AA-PLLA | MPD/AA | PLLA |
| | Mn of Block Structural Unit (B) | 9,500 | 9,500 | 9,500 | - | - |
| | Mn of Polymer | 19,000 | 19,000 | 19,000 | 9,500 | 19,000 |
| | Hard Ratio [% by Mass] | 50 | 50 | 50 | 50 | 100 |
| | Kind of Cyclic Ester Compound (II) | - | - | 4-methyl-1,7-dioxacyclotridec ane-8,13-dione | 4-methyl-1,7-dioxacyclotridec ane-8,13-dione | 4-methyl-1,7-dioxacyclotridec ane-8,13-dione |
| | Kind of Other Additives | Di-n-alkyl Adipate | N,N'-Ethylenebis octadecanamide | - | - | - |
| | Content of Cyclic Ester Compound (II) [% by Mass][*1] | 0 | 0 | 20 | 5.0 | 5.0 |
| | Content of Other Additives [% by Mass][*2] | 5.0 | 5.0 | 0 | 0 | 0 |

| | | Comparative Example 6 | Comparative Example 7 | Comparative Example 8 | Comparative Example 9 | Comparative Example 10 |
|---|---|---|---|---|---|---|
| Resin Composition Evaluation | Crystal Melting Enthalpy [J/g] | 21.2 | 28.4 | 17.5 | - | 55.4 |
| | Crystal Melting Enthalpy Increase Rate [%] | -0.4 | 6.8 | -4.1 | - | - |
| | Melting Point [°C] | 140.4 | 143.5 | 133.3 | - | 169.2 |
| | Temperature Increase of Melting Point [°C] | 1.6 | 4.7 | -5.5 | - | - |
| | Elongation at Break [%] | 9.9 | 3.2 | 8.5 | - | 4.6 |
| | Retention Rate of Elongation at Break [%] | 81.8 | 26.4 | 70.2 | - | - |
| | Haze [%] | 24.5 | 86.0 | 54.5 | - | 89.3 |
| | Haze Change Rate [%] | 43.9 | 154.1 | 97.7 | - | - |
| | Biodegradability in Compost | A | A | A | A | B |
| | Biodegradability in Activated Sludge | A | A | A | A | B |

*1: Content of Cyclic Ester Compound (II) with Respect to 100% by Mass of Total of Block Copolymer (I) and Cyclic Ester Compound (II) [% by Mass]
*2: Content of Other Additives with Respect to 100% by Mass of Total of Block Copolymer (I) and Other Additives [% by Mass]

EP 4 722 295 A1

33

The compounds represented by the abbreviations in Tables 1 to 4 are as follows.

PLLA: poly-L-lactic acid

MPD: 3-methyl-1,5-pentanediol

MPDiol: 2-methyl-1,3-propanediol

DEPD: 2, 4-diethyl-1,5-pentanediol

AA: adipic acid

SA: succinic acid

As shown in Examples 1 to 12, the resin composition according to the first embodiment of the present invention, which includes the block copolymer (I) including the block structural unit (A) having the specific polylactic acid unit (a) as a main component and the block structural unit (B) having the polyester unit (b) as a main component, and the cyclic ester compound (II), has biodegradability under a wide range of conditions, and is excellent in the balance of crystallinity, tensile properties, transparency, and heat resistance. Therefore, the industrial usefulness of the resin composition according to the first embodiment of the present invention is extremely high.

[Example 13]

Into a flask equipped with an instrument capable of distilling off a generated liquid and a vacuum pump, 3-methyl-1,5-pentanediol and adipic acid were charged at a molar ratio of 3-methyl-1,5-pentanediol/adipic acid = 1.1/1, tin octylate was further added in an amount of 0.1% by mass with respect to the total amount of 3-methyl-1,5-pentanediol and adipic acid, and the mixture was heated under a nitrogen atmosphere at normal pressure and 160°C for 3 hours, and further heated at 220°C for 3 hours to perform a reaction while distilling off water. Next, after the pressure was reduced to 2,000 Pa and the reaction was performed for 3 hours, the pressure was reduced to 80 Pa and the reaction was performed while appropriately checking until the number average molecular weight reached 9,500, thereby synthesizing a polymer composed of a structural unit (B') having a polyester unit as a main component.

The distillation residue, toluene, and water were charged into a separatory funnel at a mass ratio of distillation residue/toluene/water = 1/10/10, and 4-methyl-1,7-dioxacyclotridecane-8,13-dione contained in the distillation residue was extracted into toluene. The toluene layer was added to an eggplant flask and air-dried at 20°C overnight to volatilize toluene, and then dried in a vacuum dryer under a condition of 20°C and 100 Pa for 1 hour to obtain a crystal of 4-methyl-1, 7-dioxacyclotridecane-8,13-dione as the cyclic ester compound (II).

After completion of the reaction, the pressure was returned to normal pressure, the temperature was lowered to 80°C, toluene was added to dilute the reactant to have a solid content of 40% by mass, and then the toluene solution was charged into methanol in an amount twice the total amount of the solution. The supernatant was discarded, and methanol in the same amount as the amount of the toluene solution charged was added again for washing. The supernatant was discarded, and the collected insoluble matter was dried under a condition at a temperature of 40°C using a vacuum dryer to remove the organic volatile content, thereby obtaining a polymer composed of a structural unit (B') having a polyester unit (b) as a main component.

Toluene was added again to the purified polymer composed of the structural unit (B') to dilute the toluene solution of the polymer composed of the structural unit (B') so that the solid content was 33% by mass, and then the temperature was raised to 140°C to distill off 10% by mass of the amount of toluene added, thereby dehydrating the inside of the system.

Thereafter, the toluene solution of the polymer composed of the structural unit (B') was cooled to 80°C, the polymer composed of the structural unit (B') and L-lactide were added to be the polymer composed of the structural unit (B')/L-lactide =50/50, and toluene was further added in the above-mentioned distilled amount to adjust the solid content of the toluene solution of the polymer composed of the structural unit (B') and L-lactide to 50% by mass. Thereafter, when the temperature of the solution was raised to 100°C, tin octylate was added in an amount of 0.1% by mass to the polymer composed of the structural unit (B'), and the mixture was reacted for 4 hours to synthesize a block copolymer (I-1) composed of a block structural unit (A) having a polylactic acid unit (a) as a main component and a block structural unit (B) having a polyester unit (b) as a main component, thereby obtaining a toluene solution of the block copolymer (I-1).

Toluene was further added to this solution to dilute it to have a solid content of 40% by mass, and then the toluene solution having a solid content of 40% by mass was charged into methanol in an amount twice the total amount of the solution to precipitate a solid. The supernatant methanol was discarded, and methanol in the same amount as the amount of the toluene solution charged was added again for washing. The methanol was discarded, and the collected solid was dried in a condition of 40°C using a vacuum dryer to remove the organic volatile content, thereby obtaining a block copolymer (I-1) composed of a block structural unit (A) having a polylactic acid unit (a) as a main component and a block structural unit (B) having a polyester unit (b) as a main component. The obtained block copolymer was subjected to the measurement and evaluation described above. The results are shown in Table 5.

The obtained block copolymer (I-1), 4-methyl-1,7-dioxacyclotridecane-8,13-dione as a cyclic ester compound (II), and a polylactic acid-based polymer "INGEO 2500HP" (manufactured by NatureWorks) as an aliphatic polyester-based resin (III) were charged into a kneader Labo Plastomill (manufactured by Toyo Seiki Seisaku-sho, Ltd., product name "3S150", roller mixer type "R60") so as to have the mass ratio shown in Table 5, and melt-kneaded at a cylinder temperature of 210°C and a screw rotation speed of 50 rpm for 5 minutes, thereby obtaining a resin composition.

The obtained resin composition was subjected to the above-mentioned measurement and evaluation. The results are shown in Table 5.

[Examples 14 to 17]

A resin composition was obtained by melt-kneading in the same procedure as in Example 13, except that the mass ratio of 4-methyl-1,7-dioxacyclotridecane-8,13-dione as the cyclic ester compound (II) was changed to the amount shown in Table 5.

The obtained resin composition was subjected to the above-mentioned measurement and evaluation. The results are shown in Table 5.

[Example 18]

A block copolymer (I-2) was obtained in the same manner as in Example 10, except that the number average molecular weight was adjusted by adjusting the reaction time during the synthesis of the polymer composed of the structural unit (B') having a polyester unit (b) as a main unit, the mass ratio of L-lactide used was changed, and the dilution concentration during the synthesis was appropriately changed to a concentration that was easy to handle.

The obtained block copolymer (I-2), 4-methyl-1,7-dioxacyclotridecane-8,13-dione as the cyclic ester compound (II), and a polylactic acid-based polymer "INGEO 2500HP" as the aliphatic polyester-based resin (III) were melt-kneaded in the same procedure as in Example 13 so as to have the mass ratio shown in Table 5, thereby obtaining a resin composition.

The obtained resin composition was subjected to the above-mentioned measurement and evaluation. The results are shown in Table 5.

[Example 19]

A resin composition was obtained by melt-kneading in the same procedure as in Example 18, except that 3-methyl-1,5-dioxacycloundecane-6,11-dione, which is a condensed cyclized product of 2-methyl-1,3-propanediol and adipic acid, was used as the cyclic ester compound (II) instead of 4-methyl-1,7-dioxacyclotridecane-8,13-dione.

The obtained resin composition was subjected to the above-mentioned measurement and evaluation. The results are shown in Table 6.

[Example 20]

A block copolymer (I-3) was obtained in the same manner as in Example 15, except that 2-methyl-1,3-propanediol was used instead of 3-methyl-1,5-pentanediol, the number average molecular weight was adjusted by adjusting the reaction time during the synthesis of the polymer composed of the structural unit (B') having a polyester unit as a main unit, and the dilution concentration during the synthesis was appropriately changed to a concentration that was easy to handle.

The obtained block copolymer (I-3), 4-methyl-1,7-dioxacyclotridecane-8,13-dione as the cyclic ester compound (II), and a polylactic acid-based polymer "INGEO 2500HP" as the aliphatic polyester-based resin (III) were melt-kneaded in the same procedure as in Example 18 so as to have the mass ratio shown in Table 1, thereby obtaining a resin composition.

The obtained resin composition was subjected to the above-mentioned measurement and evaluation. The results are shown in Table 6.

[Example 21]

The block copolymer (I-3) obtained in Example 20, 3-methyl-1,5-dioxacycloundecane-6,11-dione as the cyclic ester compound (II), and a polylactic acid-based polymer "INGEO 2500HP" as the aliphatic polyester-based resin (III) were melt-kneaded in the same procedure as in Example 20 so as to have the mass ratio shown in Table 5, thereby obtaining a resin composition.

The obtained resin composition was subjected to the above-mentioned measurement and evaluation. The results are shown in Table 6.

[Example 22]

A block copolymer (I-4) was obtained in the same manner as in Example 18, except that 2,4-diethyl-1,5-pentanediol was used instead of 3-methyl-1,5-pentanediol, the number average molecular weight was adjusted by adjusting the reaction time during the synthesis of the polymer composed of the structural unit (B') having a polyester unit as a main unit, and the dilution concentration during the synthesis was appropriately changed to a concentration that was easy to handle.

The obtained block copolymer (I-4), 2,6-diethyl-1,7-dioxacyclotridecane-8,13-dione (condensed cyclized product of 2,4-diethyl-1,5-pentanediol and adipic acid) as the cyclic ester compound (II), and a polylactic acid-based polymer "INGEO 2500HP" as the aliphatic polyester-based resin (III) were melt-kneaded in the same procedure as in Example 18 so as to have the mass ratio shown in Table 6, thereby obtaining a resin composition.

The obtained resin composition was subjected to the above-mentioned measurement and evaluation. The results are shown in Table 6.

[Example 23]

A block copolymer (I-5) was obtained in the same manner as in Example 18, except that propylene glycol was used instead of 3-methyl-1,5-pentanediol, succinic acid was used instead of adipic acid, the number average molecular weight was adjusted by adjusting the reaction time during the synthesis of the polymer composed of a structural unit (B') having a polyester unit as a main unit, and the dilution concentration during the synthesis was appropriately changed to a concentration that was easy to handle.

The obtained block copolymer (I-5), 2-methyl-1,4-dioxacyclooctane-5,8-dione (condensed cyclized product of propylene glycol and succinic acid) as the cyclic ester compound (II), and a polylactic acid-based polymer "INGEO 2500HP" as the aliphatic polyester-based resin (III) were melt-kneaded in the same procedure as in Example 18 so as to have the mass ratio shown in Table 6, thereby obtaining a resin composition.

The obtained resin composition was subjected to the above-mentioned measurement and evaluation. The results are shown in Table 6.

[Example 24]

A block copolymer (I-6) was obtained in the same manner as in Example 18, except that 1,4-butanediol was used instead of 3-methyl-1,5-pentanediol, succinic acid was used instead of adipic acid, the number average molecular weight was adjusted by adjusting the reaction time during the synthesis of the polymer composed of the structural unit (B') having a polyester unit as a main unit, and the dilution concentration during the synthesis was appropriately changed to a concentration that was easy to handle.

The obtained block copolymer (I-6), 1,6-dioxacyclodecane-7,10-dione (condensed cyclized product of 1,4-butanediol and succinic acid) as the cyclic ester compound (II), and a polylactic acid-based polymer "INGEO 2500HP" as the aliphatic polyester-based resin (III) were melt-kneaded in the same procedure as in Example 15 so as to have the mass ratio shown in Table 6, thereby obtaining a resin composition.

The obtained resin composition was subjected to the above-mentioned measurement and evaluation. The results are shown in Table 6.

[Comparative Example 11]

A resin composition was obtained by melt-kneading in the same procedure as in Example 13, except that the cyclic ester compound (II) was not used.

The obtained resin composition was subjected to the above-mentioned measurement and evaluation. The results are shown in Table 7.

[Comparative Example 12]

A resin composition was obtained by melt-kneading in the same procedure as in

Example 18, except that the cyclic ester compound (II) was not used.

The obtained resin composition was subjected to the above-mentioned measurement and evaluation. The results are shown in Table 7.

[Comparative Example 13]

A resin composition was obtained by melt-kneading in the same procedure as in Example 13, except that Di-n-alkyl Adipate (Plasticizer), which is an ester compound having no cyclic structure, was used instead of the cyclic ester compound (II).
The obtained resin composition was subjected to the above-mentioned measurement and evaluation. The results are shown in Table 7.

[Comparative Example 14]

A resin composition was obtained by melt-kneading in the same procedure as in Example 13, except that N,N'-Ethylenebisoctadecanamide as a crystal nucleating agent was used instead of the cyclic ester compound (II).
The obtained resin composition was subjected to the above-mentioned measurement and evaluation. The results are shown in Table 7.

[Comparative Example 15]

A resin composition was obtained by melt-kneading in the same procedure as in Example 13, except that the mass ratio of 4-methyl-1,7-dioxacyclotridecane-8,13-dione as the cyclic ester compound (II) was changed to the amount shown in Table 7.
The obtained resin composition was subjected to the above-mentioned measurement and evaluation. The results are shown in Table 7.

[Table 5]

Table 5

| | | | Example 13 | Example 14 | Example 15 | Example 16 | Example 17 | Example 18 |
|---|---|---|---|---|---|---|---|---|
| Block Copolymer (I) | | Kind | Block Co-polymer (I-1) | Block Co-polymer (I-1) | Block Co-polymer (I-1) | Block Co-polymer (I-1) | Block Co-polymer (I-1) | Block Co-polymer (I-2) |
| | | Structural Unit A-B-A | PLLA-MPD/AA-PLLA | PLLA-MPD/AA-PLLA | PLLA-MPD/AA-PLLA | PLLA-MPD/AA-PLLA | PLLA-MPD/AA-PLLA | PLLA-MPD/AA-PLLA |
| | | Mn of Block Structural Unit (B) | 9,500 | 9,500 | 9,500 | 9,500 | 9,500 | 26,600 |
| | | Mn of Block Copolymer (I) | 19,000 | 19,000 | 19,000 | 19,000 | 19,000 | 38,000 |
| | | Hard Ratio [% by Mass] | 50 | 50 | 50 | 50 | 50 | 30 |
| | | Melting Point [°C] | 141 | 141 | 141 | 141 | 141 | 157 |
| | | Glass Transition Temperature [°C] | -60 | -60 | -60 | -60 | -60 | -60 |
| | | Content with Respect to Total of (I) and (II) [% by Mass] | 10 | 10 | 10 | 10 | 10 | 7.5 |

(continued)

| | | Example 13 | Example 14 | Example 15 | Example 16 | Example 17 | Example 18 |
|---|---|---|---|---|---|---|---|
| Aliphatic Polyester-Based Resin (III) | Kind | 2500HP | 2500HP | 2500HP | 2500HP | 2500HP | 2500HP |
| | Content with Respect to Total of (I) and (II) [% by Mass] | 90 | 90 | 90 | 90 | 90 | 92.5 |
| Cyclic Ester Compound (II) | Kind | 4-methyl-1,7-dioxacyclo tridecane-8,13-dione | 4-methyl-1,7-dioxacyclo tridecane-8,13-dione | 4-methyl-1,7-dioxacyclo tridecane-8,13-dione | 4-methyl-1,7-dioxacyclo tridecane-8,13-dione | 4-methyl-1,7-dioxacyclo tridecane-8,13-dione | 4-methyl-1,7-dioxacyclo tridecane-8,13-dione |
| | Content in Composition [% by Mass] | 0.01 | 0.02 | 0.03 | 0.1 | 1.0 | 0.03 |
| Resin Composition Evaluation | Biodegradability (Compost) | A | A | A | A | A | A |
| | Glass Transition Temperature [°C] | 58.9 | 59.3 | 59.5 | 59.0 | 60.2 | 61.4 |
| | Temperature Increase of Glass Transition Temperature [°C] | 0.6 | 1.0 | 1.2 | 0.7 | 1.9 | 1.1 |
| | Crystal Melting Enthalpy [J/g] | 38.1 | 39.9 | 39.9 | 39.7 | 39.6 | 40.3 |
| | Crystal Melting Enthalpy Increase Rate [%] | 0.3 | 5.0 | 5.0 | 4.5 | 4.2 | 5.5 |
| | Haze [%] | 42.8 | 36.6 | 37.0 | 36.7 | 39.8 | 37.6 |
| | Haze Change Rate [%] | 98.8 | 84.5 | 85.5 | 84.8 | 91.9 | 85.3 |

[Table 6]

Table 6

| | | Example 19 | Example 20 | Example 21 | Example 22 | Example 23 | Example 24 |
|---|---|---|---|---|---|---|---|
| Block Copolymer (I) | Kind | Block Copolymer (I-2) | Block Copolymer (I-3) | Block Copolymer (I-3) | Block Copolymer (1-4) | Block Copolymer (I-5) | Block Copolymer (I-6) |
| | Structural Unit A-B-A | PLLA-MPD/AA-PLLA | PLLA-MPDiol/AA-PLLA | PLLA-MPDiol/AA-PLLA | PLLA-DEPD/AA-PLLA | PLLA-PG/SA-PLLA | PLLA-1,4-BD/SA-PLLA |
| | Mn of Block Structural Unit (B) | 26,600 | 26,600 | 26,600 | 26,600 | 26,600 | 26,600 |
| | Mn of Block Copolymer (I) | 38,000 | 38,000 | 38,000 | 38,000 | 38,000 | 38,000 |
| | Hard Ratio [% by Mass] | 30 | 30 | 30 | 30 | 30 | 30 |
| | Melting Point [°C] | 157 | 158 | 158 | 158 | 158 | 158 |
| | Glass Transition Temperature [°C] | -60 | -30 | -30 | -55 | -5 | -32 |
| | Content with Respect to Total of (I) and (II) [% by Mass] | 7.5 | 7.5 | 7.5 | 7.5 | 7.5 | 7.5 |
| Aliphatic Polyester-Based Resin (III) | Kind | 2500HP | 2500HP | 2500HP | 2500HP | 2500HP | 2500HP |
| | Content with Respect to Total of (I) and (II) [% by Mass] | 92.5 | 92.5 | 92.5 | 92.5 | 92.5 | 92.5 |
| Cyclic Ester Compound (II) | Kind | 3-methyl-1,5-dioxacyclo undecane-6,11-dione | 4-methyl-1,7-dioxacyclo tridecane-8,13-dione | 3-methyl-1,5-dioxacyclo undecane-6,11-dione | 2,6-diethyl-1,7-dioxacyclo tridecane-8,13-dione | 2-methyl-1,4-dioxa cycyclo octane-5,8-dione | 1,6-dioxacyclo decane-7,10-dione |
| | Content in Composition [% by Mass] | 0.03 | 0.03 | 0.03 | 0.03 | 0.03 | 0.03 |
| Resin Composition Evaluation | Biodegradability (Compost) | A | A | A | A | A | A |
| | Glass Transition Temperature [°C] | 61.1 | 61.3 | 60.9 | 61.3 | 60.8 | 60.7 |
| | Temperature Increase of Glass Transition Temperature [°C] | 0.8 | 1.0 | 0.6 | 1.0 | 0.5 | 0.4 |
| | Crystal Melting Enthalpy [J/g] | 40.0 | 40.1 | 39.8 | 40.1 | 39.6 | 39.8 |
| | Crystal Melting Enthalpy Increase Rate [%] | 4.7 | 5.0 | 4.2 | 5.0 | 3.7 | 4.2 |
| | Haze [%] | 36.4 | 37.2 | 35.8 | 37.2 | 35.2 | 35.8 |

(continued)

|  | | Example 19 | Example 20 | Example 21 | Example 22 | Example 23 | Example 24 |
|---|---|---|---|---|---|---|---|
|  | Haze Change Rate [%] | 82.5 | 84.4 | 81.2 | 84.4 | 79.8 | 81.2 |

[Table 7]

Table 7

|  | | | Comparative Example 11 | Comparative Example 12 | Comparative Example 13 | Comparative Example 14 | Comparative Example 15 |
|---|---|---|---|---|---|---|---|
| Block Copolymer (I) | | Kind | Block Copolymer (I-1) | Block Copolymer (I-2) | Block Copolymer (I-1) | Block Copolymer (I-1) | Block Copolymer (I-1) |
| | | Structural Unit A-B-A | PLLA-MPD/AA-PLLA | PLLA-MPD/AA-PLLA | PLLA-MPD/AA-PLLA | PLLA-MPD/AA-PLLA | PLLA-MPD/AA-PLLA |
| | | Mn of Block Structural Unit (B) | 9,500 | 26,600 | 9,500 | 9,500 | 9,500 |
| | | Mn of Block Copolymer (I) | 19,000 | 38,000 | 19,000 | 19,000 | 19,000 |
| | | Hard Ratio [% by Mass] | 50 | 30 | 50 | 50 | 50 |
| | | Melting Point [°C] | 141 | 157 | 141 | 141 | 141 |
| | | Glass Transition Temperature [°C] | -60 | -60 | -60 | -60 | -60 |
| | | Content with Respect to Total of (I) and (II) [% by Mass] | 10 | 7.5 | 10 | 10 | 10 |
| Aliphatic Polyester-Based Resin (III) | | Kind of Resin | 2500HP | 2500HP | 2500HP | 2500HP | 2500HP |
| | | Content with Respect to Total of (I) and (II) [% by Mass] | 90 | 92.5 | 90 | 90 | 90 |
| Cyclic Ester Compound (II) | | Kind | - | - | - | - | 4-methyl-1,7-dioxacyclo tridecane-8,13-dione |
| | | Content in Composition [% by Mass] | - | - | - | - | 15 |
| Other Additives | | Kind | - | - | Di-n-alkyl Adipate | N,N'-Ethylenebis octadecan amide | - |
| | | Content of Other Additives in Composition [% by Mass] | 0 | 0 | 2.5 | 2.5 | 0 |

(continued)

| | | Comparative Example 11 | Comparative Example 12 | Comparative Example 13 | Comparative Example 14 | Comparative Example 15 |
|---|---|---|---|---|---|---|
| Resin Composition Evaluation | Biodegradability (Compost) | A | A | A | A | A |
| | Glass Transition Temperature [°C] | 58.3 | 60.3 | 53.2 | 61.3 | 42.8 |
| | Temperature Increase of Glass Transition Temperature [°C] | - | - | -5.1 | 3.0 | -15.5 |
| | Crystal Melting Enthalpy [J/g] | 38.0 | 38.2 | 37.5 | 39.9 | 39.3 |
| | Crystal Melting Enthalpy Increase Amount [J/g] | - | - | -0.5 | 1.9 | 1.3 |
| | Haze [%] | 43.3 | 44.1 | 31.7 | 92.7 | 57.2 |
| | Haze Change Rate [%] | - | - | 73.2 | 214.1 | 132.1 |

The compounds represented by the abbreviations in Tables 5 to 7 are as follows.

PLLA: poly-L-lactic acid

MPD: 3-methyl-1,5-pentanediol

DEPD: 2,4-diethyl-1, 5-pentanediol

MPDiol: 2-methyl-1,3-propanediol

1,4-BD: 1,4-butanediol

PG: propylene glycol

AA: adipic acid

SA: succinic acid

As shown in Examples 13 to 24, it was confirmed that the resin composition according to the second embodiment of the present invention containing the block copolymer (I) having the specific structure, the aliphatic polyester-based resin (III), and the cyclic ester compound (II) is excellent in the balance of biodegradability, heat resistance, and transparency.
On the other hand, the resin compositions obtained in Comparative Examples 11 and 12 had poor in heat resistance because they did not contain the cyclic ester compound (II).
In addition, since the resin composition obtained in Comparative Example 13 contained an ester compound having no cyclic structure instead of the cyclic ester compound (II), the heat resistance was poor.
In addition, since the resin composition obtained in Comparative Example 14 contained the crystal nucleating agent instead of the cyclic ester compound (II), the transparency was poor.
In addition, since the resin composition obtained in Comparative Example 15 had high content of the cyclic ester compound (II), the glass transition temperature was very low and the transparency was poor.
As shown in the results of Examples 13 to 24, the resin composition according to the second embodiment of the present invention is excellent in the balance of biodegradability, heat resistance, and transparency. Therefore, the industrial usefulness of the resin composition according to the second embodiment of the present invention is extremely high.

**Claims**

1. A resin composition comprising a block copolymer (I) and a cyclic ester compound (II), wherein the block copolymer (I) contains a block structural unit (A) having a polylactic acid unit (a) as a main component and a block structural unit (B) having a polyester unit (b) containing a unit derived from an aliphatic diol (b1) and an aliphatic dicarboxylic acid (b2), as a main component, and a content of the cyclic ester compound (II) is 0.01 to 15% by mass with respect to 100% by mass of a total of the block copolymer (I) and the cyclic ester compound (II).

2. The resin composition according to Claim 1, wherein the cyclic ester compound (II) contains a structure derived from an aliphatic diol (c1) and an aliphatic dicarboxylic acid (c2).

3. The resin composition according to Claim 2, wherein the aliphatic diol (c1) and the aliphatic diol (b1) are the same, and the aliphatic dicarboxylic acid (c2) and the aliphatic dicarboxylic acid (b2) are the same.

4. The resin composition according to Claim 1, wherein the aliphatic diol (b1) is an aliphatic diol having an alkyl group as a branched chain and having 4 or more carbon atoms.

5. The resin composition according to Claim 1, wherein the block copolymer (I) has a number average molecular weight of 2,000 to 200,000.

6. The resin composition according to Claim 1, wherein the block structural unit (B) has a number average molecular weight of less than 80,000.

7. The resin composition according to Claim 1, wherein the aliphatic dicarboxylic acid (b2) has 4 or more and 12 or less carbon atoms.

8. The resin composition according to Claim 4, wherein the aliphatic diol (b1) has 9 or less carbon atoms.

9. The resin composition according to Claim 4, wherein the branched chain in the aliphatic diol (b1) is a methyl group.

10. The resin composition according to Claim 1, having a melting point of 110°C or higher and lower than 180°C.

11. The resin composition according to Claim 1, further comprising an aliphatic polyester-based resin (III), wherein a content of the cyclic ester compound (II) is 0.005 to 10% by mass with respect to 100% by mass of a total of the block copolymer (I), the cyclic ester compound (II), and the aliphatic polyester-based resin (III).

12. The resin composition according to Claim 11, wherein the aliphatic polyester-based resin (III) is at least one selected from the group consisting of a biomass resin and a biodegradable resin.

13. The resin composition according to Claim 11 or 12, wherein the aliphatic polyester-based resin (III) is a polylactic acid-based resin.

14. The resin composition according to Claim 11, wherein the block copolymer (I) has a number average molecular weight of 5,000 to 400,000.

15. The resin composition according to Claim 1 or 11, wherein the block structural unit (B) has a number average molecular weight of 1,000 or more and less than 300,000.

16. The resin composition according to Claim 1 or 11, wherein the block copolymer (I) has a glass transition temperature of -80°C or higher and 15°C or lower.

17. The resin composition according to Claim 1 or 11, wherein the block copolymer (I) has a glass transition temperature of -80°C or higher and -45°C or lower.

18. The resin composition according to Claim 1 or 11, wherein the block copolymer (I) has a melting point of 110°C or higher and lower than 180°C.

19. The resin composition according to Claim 1 or 11, wherein the block structural unit (A) contains a structural unit derived from poly-L-lactic acid or a structural unit derived from poly-D-lactic acid.

20. The resin composition according to Claim 1 or 11, wherein 5% by mass or more and 95% by mass or less of the block structural unit (A) is contained with respect to 100% by mass of a total of the block structural unit (A) and the block structural unit (B).

## INTERNATIONAL SEARCH REPORT

| International application No. |
|---|
| **PCT/JP2024/019967** |

### A. CLASSIFICATION OF SUBJECT MATTER

*C08L 67/00*(2006.01)i; *C08G 63/60*(2006.01)i; *C08K 5/15*(2006.01)i; *C08L 101/16*(2006.01)i
FI:  C08L67/00 ZBP; C08K5/15; C08G63/60; C08L101/16

According to International Patent Classification (IPC) or to both national classification and IPC

### B. FIELDS SEARCHED

Minimum documentation searched (classification system followed by classification symbols)

C08K3/00-13/08; C08L1/00-101/14; C08G63/00-64/42; C08L101/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 07-173266 A (DAINIPPON INK & CHEMICALS INC.) 11 July 1995 (1995-07-11) claims 1-28, paragraphs [0016]-[0017], [0047], [0060], examples 1, 2, 4-9, 12-15, 17-22, 25-27 | 1, 5-8, 10, 14-20 |
| Y | | 4, 9, 11-20 |
| A | | 2-3 |
| Y | JP 08-300570 A (DAINIPPON INK & CHEMICALS INC.) 19 November 1996 (1996-11-19) claim 5, paragraph [0018] | 4, 9 |
| A | | 1-3, 5-8, 10-20 |
| Y | JP 09-077863 A (DAINIPPON INK & CHEMICALS INC.) 25 March 1997 (1997-03-25) paragraph [0036] | 4, 9 |
| A | | 1-3, 5-8, 10-20 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 July 2024** | **06 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

44

## INTERNATIONAL SEARCH REPORT

| International application No. |
| --- |
| **PCT/JP2024/019967** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2014-001261 A (NITTO DENKO CORPORATION) 09 January 2014 (2014-01-09)<br>    claims 1-27, examples | 11-20 |
| A | | 1-10 |
| Y | JP 2011-046005 A (RISU PACK CO., LTD.) 10 March 2011 (2011-03-10)<br>    claims 1-8, examples | 11-20 |
| A | | 1-10 |
| Y | JP 2004-250697 A (DAINIPPON INK & CHEMICALS INC.) 09 September 2004<br>(2004-09-09)<br>    claims 1-7, examples | 11-20 |
| A | | 1-10 |
| A | JP 10-182801 A (SHIMADZU CORPORATION) 07 July 1998 (1998-07-07)<br>    claims 1-9, examples | 1-20 |
| A | JP 2011-153275 A (MITSUBISHI CHEMICAL CORPORATION) 11 August 2011<br>(2011-08-11)<br>    claims 1-13, examples | 1-20 |

Form PCT/ISA/210 (second sheet) (July 2022)

## INTERNATIONAL SEARCH REPORT
### Information on patent family members

International application No.

**PCT/JP2024/019967**

| Patent document cited in search report | | | Publication date (day/month/year) | Patent family member(s) | Publication date (day/month/year) |
|---|---|---|---|---|---|
| JP | 07-173266 | A | 11 July 1995 | US 5403897 A claims 1-28, column 3, lines 21-52, column 7, lines 35-47, column 8, lines 60-68, column 9, lines 48-57, examples 1, 2, 4-9, 12-15, 17-22, 25-27 EP 618250 A1 DE 69424336 T2 | |
| JP | 08-300570 | A | 19 November 1996 | (Family: none) | |
| JP | 09-077863 | A | 25 March 1997 | US 5844066 A column 6, lines 3-9 | |
| JP | 2014-001261 | A | 09 January 2014 | (Family: none) | |
| JP | 2011-046005 | A | 10 March 2011 | (Family: none) | |
| JP | 2004-250697 | A | 09 September 2004 | (Family: none) | |
| JP | 10-182801 | A | 07 July 1998 | (Family: none) | |
| JP | 2011-153275 | A | 11 August 2011 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015044984 A
- JP H08157577 B
- JP 2018062573 A
- JP 2001335623 A